# EUROPEAN PATENT APPLICATION

(11) **EP 4 693 047 A2**
(43) Date of publication of application: **11.02.2026**
(21) Application number: 25218514.5
(22) Date of filing: 25.11.2025
(51) Int. Cl.: G06F 9/50

(54) **COMPUTING SYSTEM, MULTI-CORE COMPUTING CIRCUIT-BASED COMPUTING RESULT GENERATION METHOD, AND MEDIUM**

(30) Priority: 17.06.2025 CN 202510813078
(71) Applicant: Beijing Horizon Information Technology Co., Ltd., Beijing 100094 (CN)
(72) Inventor: DING, Jinnan, Beijing, 100094 (CN)
(74) Representative: Dehns Germany Partnerschaft mbB

(57) **Abstract**

Disclosed are a computing system, a multi-core computing circuit-based computing result generation method, and a medium. The computing system includes a multi-core computing circuit and a primary controller. The primary controller is configured to determine a target computing task; determine at least two computing cores for participating in the target computing task from the multi-core computing circuit; and generate computing configuration information respectively corresponding to the at least two computing cores based on the target computing task. The at least two computing cores are configured to collaborate for computation based on the respective corresponding computing configuration information, to generate a target computing result corresponding to the target computing task.

## Description

### TECHNICAL FIELD

This disclosure relates to technologies of chips, and in particular, to a computing system, a multi-core computing circuit-based computing result generation method, and a medium.

### BACKGROUND

Currently, application of chips becomes increasingly widespread. For example, in the field of intelligent driving, application of intelligent driving chips becomes increasingly widespread.

Generally, the chip includes a computing circuit for executing computing tasks. How to improve computational efficiency of the computing circuit is a technical problem worthy of attention for a person skilled in the art.

### SUMMARY

To resolve the foregoing technical problem, this disclosure provides a computing system, a multi-core computing circuit-based computing result generation method, and a medium.

According to an aspect of an embodiment of this disclosure, a computing system is provided, including a multi-core computing circuit and a primary controller, wherein
the primary controller is configured to determine a target computing task; determine at least two computing cores for participating in the target computing task from the multi-core computing circuit; and generate computing configuration information respectively corresponding to the at least two computing cores based on the target computing task; and
the at least two computing cores are configured to collaborate for computation based on the respective corresponding computing configuration information, to generate a target computing result corresponding to the target computing task.

According to another aspect of an embodiment of this disclosure, a multi-core computing circuit-based computing result generation method is provided, including:
determining a target computing task;
determining at least two computing cores for participating in the target computing task from a multi-core computing circuit;
generating computing configuration information respectively corresponding to the at least two computing cores based on the target computing task; and
calling the at least two computing cores to collaborate for computation based on the respective corresponding computing configuration information, to generate a target computing result corresponding to the target computing task.

According to still another aspect of an embodiment of this disclosure, a computer readable storage medium is provided, where the storage medium stores a computer program, and the computer program is used for implementing the multi-core computing circuit-based computing result generation method that is described above.

According to yet another aspect of an embodiment of this disclosure, an electronic device is provided, where the electronic device includes:
a processor; and
a memory, configured to store processor-executable instructions, where
the processor is configured to read the executable instructions from the memory, and execute the instructions to implement the multi-core computing circuit-based computing result generation method that is described above.

According to still yet another aspect of an embodiment of this disclosure, a computer program product is provided, wherein, when instructions in the computer program product are executed by a processor, the multi-core computing circuit-based computing result generation method described above is implemented.

According to the computing system, the multi-core computing circuit-based computing result generation method, the medium, the electronic device, and the program product that are provided in the foregoing embodiments of this disclosure, the primary controller may determine the at least two computing cores for participating in the target computing task from the multi-core computing circuit, and distribute the corresponding computing configuration information to the at least two computing cores based on the target computing task. Correspondingly, the at least two computing cores may collaborate for computation based on the respective corresponding computing configuration information, to generate the target computing result corresponding to the target computing task. Thus, the target computing task is completed. To be specific, the primary controller may schedule and control the at least two computing cores in the multi-core computing circuit through the distribution of the computing configuration information, so that the at least two computing cores perform parallel computing and collaborative work to efficiently and quickly complete the target computing task, being beneficial for improving computational efficiency.

### BRIEF DESCRIPTION OF DRAWINGS

FIG. 1 is a schematic diagram 1 of a structure of a multi-core computing circuit in a computing system according to some exemplary embodiments of this disclosure;
FIG. 2 is a schematic diagram of a structure of a computing system according to some exemplary embodiments of this disclosure;
FIG. 3 is a schematic diagram of a target computing result according to some exemplary embodiments of this disclosure;
FIG. 4 is a schematic diagram 2 of a structure of a multi-core computing circuit in a computing system according to some exemplary embodiments of this disclosure;
FIG. 5-1 is a schematic diagram 1 of an input tensor according to some exemplary embodiments of this disclosure;
FIG. 5-2 is a schematic diagram 1 of an input tensor, input weight, and a target computing result according to some exemplary embodiments of this disclosure;
FIG. 5-3 is a schematic diagram 2 of an input tensor, input weight, and a target computing result according to some exemplary embodiments of this disclosure;
FIG. 5-4 is a schematic diagram 1 of an input tensor, input weight, a reference computing result, and a target computing result according to some exemplary embodiments of this disclosure;
FIG. 5-5 is a schematic diagram 2 of an input tensor, input weight, a reference computing result, and a target computing result according to some exemplary embodiments of this disclosure;

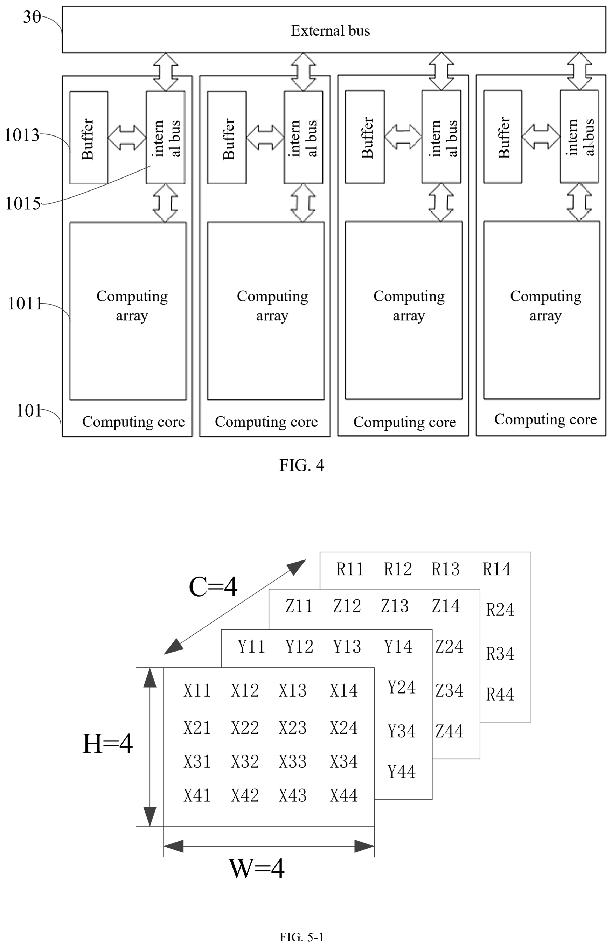

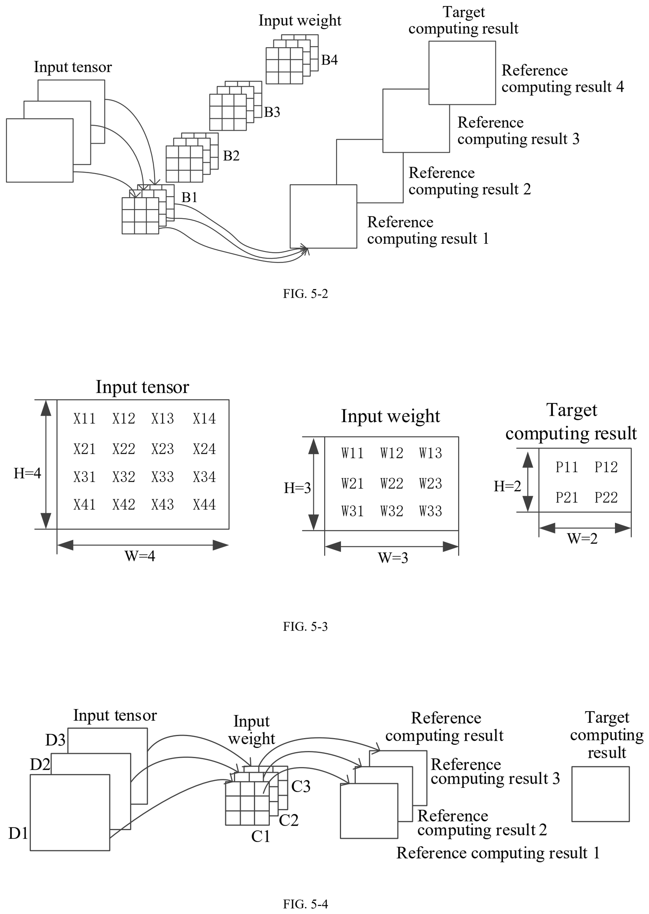

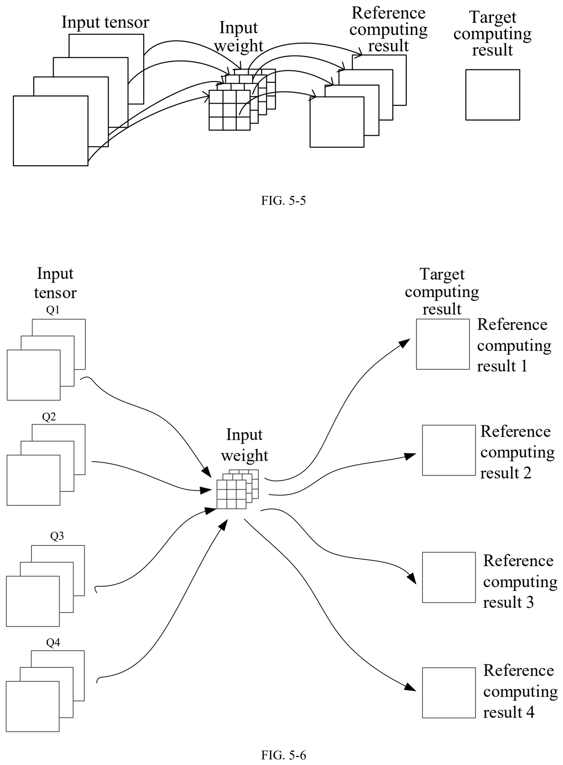

FIG. 5-6 is a schematic diagram 2 of an input tensor according to some exemplary embodiments of this disclosure;

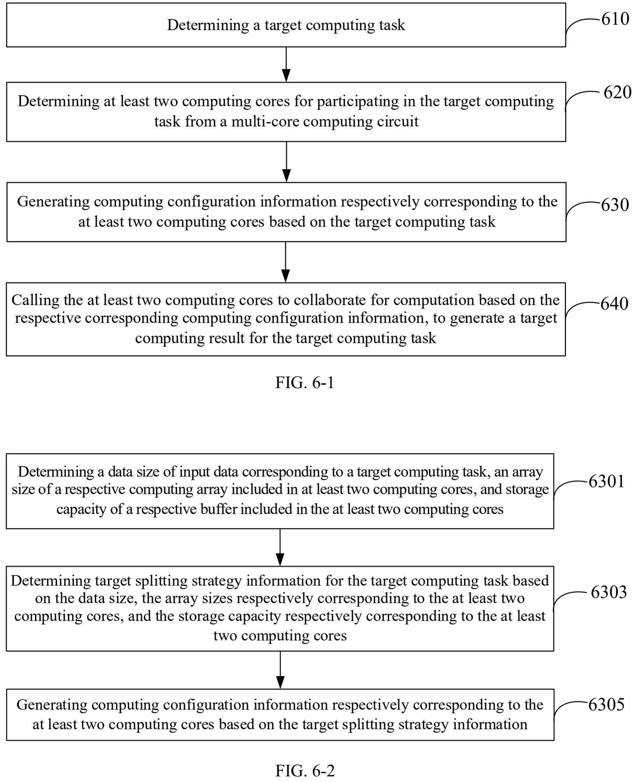

FIG. 6-1 is a schematic flowchart 1 of a multi-core computing circuit-based computing result generation method according to some exemplary embodiments of this disclosure;
FIG. 6-2 is a schematic flowchart 2 of a multi-core computing circuit-based computing result generation method according to some exemplary embodiments of this disclosure;

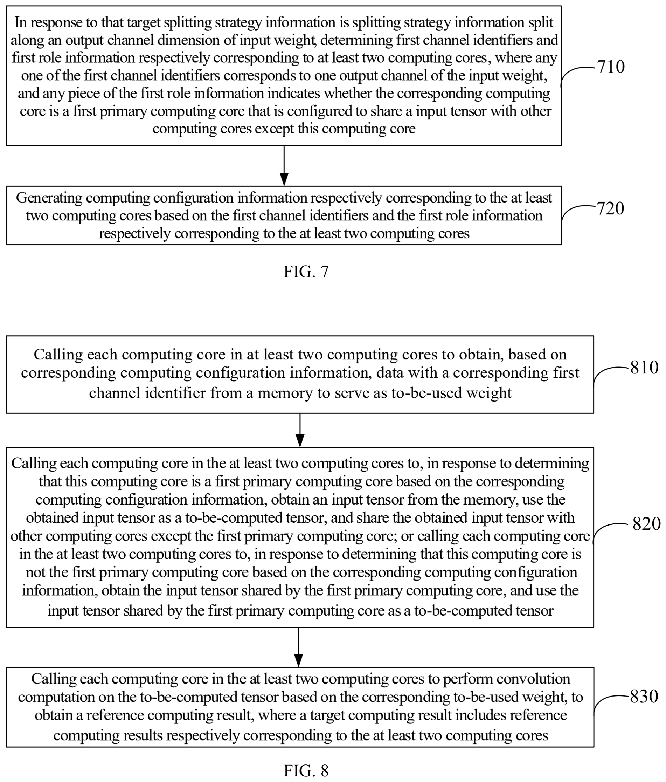

FIG. 7 is a schematic flowchart 3 of a multi-core computing circuit-based computing result generation method according to some exemplary embodiments of this disclosure;
FIG. 8 is a schematic flowchart 4 of a multi-core computing circuit-based computing result generation method according to some exemplary embodiments of this disclosure;

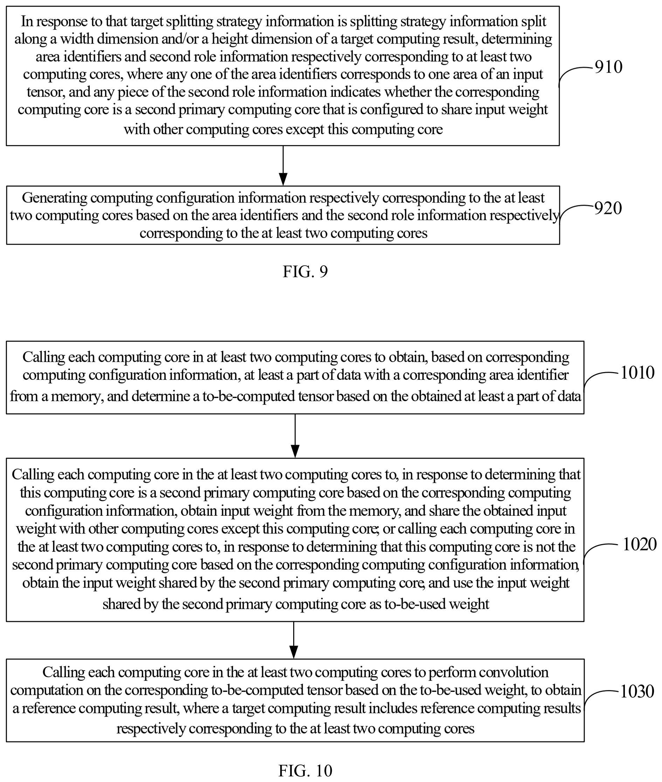

FIG. 9 is a schematic flowchart 5 of a multi-core computing circuit-based computing result generation method according to some exemplary embodiments of this disclosure;
FIG. 10 is a schematic flowchart 6 of a multi-core computing circuit-based computing result generation method according to some exemplary embodiments of this disclosure;

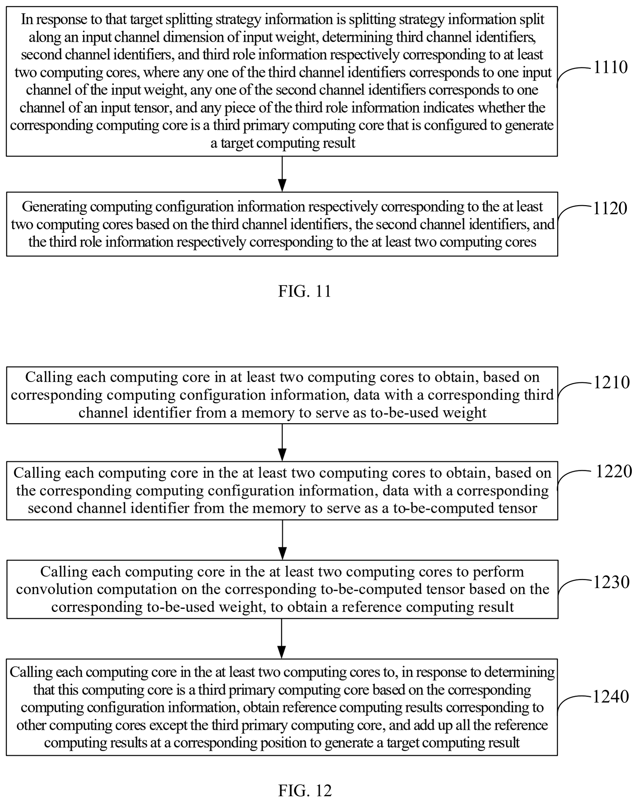

FIG. 11 is a schematic flowchart 7 of a multi-core computing circuit-based computing result generation method according to some exemplary embodiments of this disclosure;
FIG. 12 is a schematic flowchart 8 of a multi-core computing circuit-based computing result generation method according to some exemplary embodiments of this disclosure;

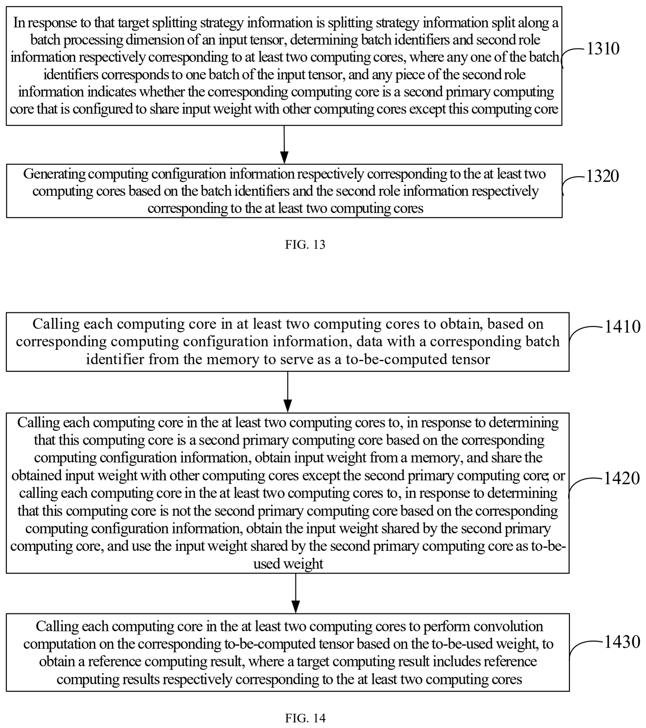

FIG. 13 is a schematic flowchart 9 of a multi-core computing circuit-based computing result generation method according to some exemplary embodiments of this disclosure;
FIG. 14 is a schematic flowchart 10 of a multi-core computing circuit-based computing result generation method according to some exemplary embodiments of this disclosure;

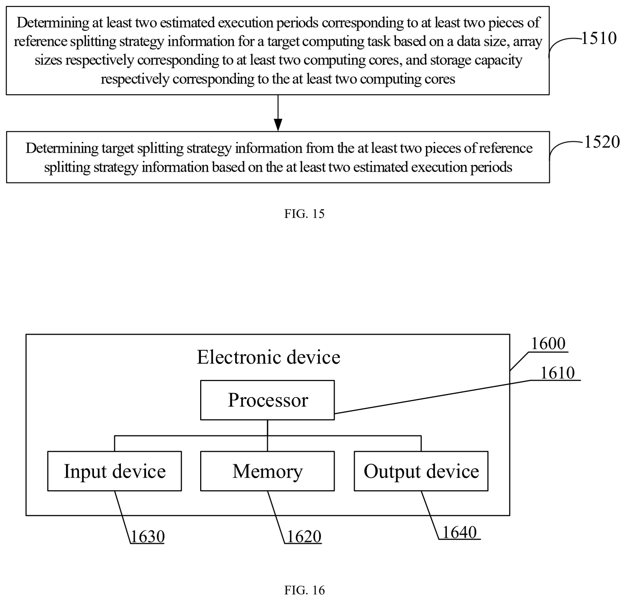

FIG. 15 is a schematic flowchart 11 of a multi-core computing circuit-based computing result generation method according to some exemplary embodiments of this disclosure; and
FIG. 16 is a schematic diagram of a structure of an electronic device according to some exemplary embodiments of this disclosure.

### DETAILED DESCRIPTION OF THE EMBODIMENTS

To explain this disclosure, exemplary embodiments of this disclosure are described below in detail with reference to accompanying drawings. Obviously, the embodiments described are merely some, rather than all of embodiments of this disclosure. It should be understood that this disclosure is not limited to the exemplary embodiments.

It should be noted that unless otherwise specified, the scope of this disclosure is not limited by relative arrangement, numeric expressions, and numerical values of components and steps described in these embodiments.

### Application overview

A chip may include a computing circuit for executing computing tasks. For example, the chip may include a tensor computing circuit for executing tensor computing tasks. For another example, the chip may include a vector computing circuit for executing vector computing tasks. It may be understood that tensor computation may include convolution computation, such as two-dimensional convolution computation, three-dimensional convolution computation, and grouped convolution computation. Vector computation may include point-to-point element-wise computation, such as point-to-point element-wise multiplication computation and point-to-point element-wise addition computation.

In a process of implementing this disclosure, the inventor finds that in related technologies, the computing circuit has low computational efficiency and is difficult to meet practical requirements. How to improve computational efficiency of the computing circuit is a technical problem worthy of attention for a person skilled in the art.

### Exemplary overview

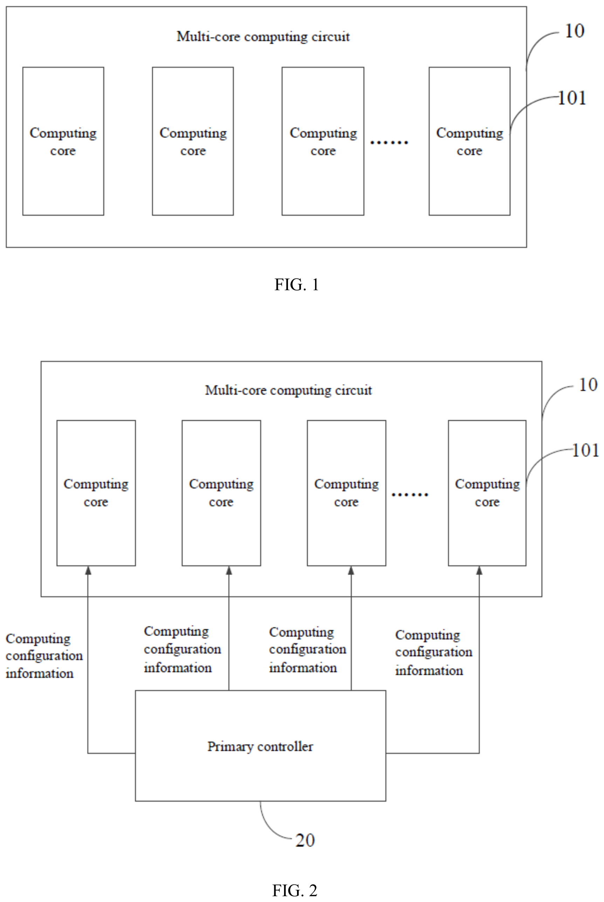

To resolve the foregoing technical problem, a multi-core computing circuit 10 shown in FIG. 1 may be introduced in embodiments of this disclosure. The multi-core computing circuit 10 may be a computing circuit that includes a plurality of computing cores 101, which may be basic units responsible for executing instructions and processing data. Different computing cores 101 in the multi-core computing circuit 10 may collaborate for computation to complete a same computing task, thereby improving computational efficiency.

### Exemplary system

FIG. 2 is a schematic diagram of a structure of a computing system according to some exemplary embodiments of this disclosure. As shown in FIG. 2, the computing system may include a multi-core computing circuit 10 and a primary controller 20.

The primary controller 20 is configured to determine a target computing task; determine at least two computing cores 101 for participating in the target computing task from the multi-core computing circuit 10; and generate computing configuration information respectively corresponding to the at least two computing cores 101 based on the target computing task.

The at least two computing cores 101 are configured to collaborate for computation based on the respective corresponding computing configuration information, to generate a target computing result corresponding to the target computing task.

Optionally, the multi-core computing circuit 10 is a computing circuit that includes M computing cores 101, where M is an integer greater than or equal to 2. The computing cores 101 are basic units responsible for executing instructions and processing data, and any two computing cores 101 among the M computing cores 101 may work independently or collaboratively. The multi-core computing circuit 10 may be designed in a chip, and for ease of explanation, this chip may be referred to as a first chip hereinafter.

Optionally, the primary controller 20 may be a controller for scheduling and controlling the M computing cores 101. The primary controller 20 includes, for example but is not limited to, a central processing unit (CPU), a graphics processing unit (GPU), and a single-chip microcomputer. The primary controller 20 may be electrically connected to the M computing cores 101, separately. The primary controller 20 may be designed in a chip, and for ease of explanation, this chip may be referred to as a second chip hereinafter. The first chip and the second chip may be a same chip or different chips.

In the embodiments of this disclosure, the primary controller 20 may determine a to-be-executed computing task, which may be referred to as a target computing task. In an optional example, the first chip and the second chip may be a same intelligent driving chip, which may perform environmental perception, path planning, and the like based on a neural network model during operation. The neural network model may include a plurality of operators arranged in sequence. If a current to-be-run operator among the plurality of operators is a convolution operator, the primary controller 20 may determine a convolutional computing task as the target computing task. If the current to-be-run operator among the plurality of operators is a point-to-point element-wise operator, the primary controller 20 may determine a point-to-point element-wise computing task as the target computing task. Herein, the convolutional computing task may be, for example, a computing task for performing convolution computation on a feature map input to the convolution operator. The point-to-point element-wise computing task may be, for example, a computing task for performing point-to-point element-wise computation on two feature maps input to the point-to-point element-wise operator.

The primary controller 20 may determine N computing cores 101 for participating in the target computing task from the M computing cores 101 included in the multi-core computing circuit 10, where N is an integer greater than or equal to 2 and less than or equal to M. That the N computing cores 101 are configured to participate in the target computing task may be understood as: each computing core 101 in the N computing cores 101 completes some computing tasks in the target computing task, and the N computing cores 101 complete the entire target computing task together. In an optional example, the primary controller 20 may select all computing cores 101 that are currently in an idle status from the M computing cores 101 included in the multi-core computing circuit 10, and all the computing cores 101 that are currently in the idle status may be used as the N computing cores 101 for participating in the target computing task. In another optional example, the primary controller 20 may be pre-configured with minimum task quantity information that is recommended to be allocated to a single computing core 101. In combination with the minimum task quantity information and actual task quantity information of the target computing task, the primary controller 20 may determine a maximum quantity of computing cores 101 to participate in the target computing task, and determine the N computing cores 101 for participating in the target computing task from the M computing cores 101 included in the multi-core computing circuit 10 according to a constraint condition that a value of N is less than or equal to the maximum quantity. It should be noted that terms "at least two computing cores 101" and "N computing cores 101" described below both refer to the N computing cores 101 for participating in the target computing task that are determined by the primary controller 20.

The primary controller 20 generates computing configuration information respectively corresponding to the N computing cores 101 based on the target computing task. The computing configuration information corresponding to any computing core 101 is configuration information indicating a working mode of that computing core 101 when participating in the target computing task, such as configuration information indicating to-be-computed data or a computation rule of that computing core 101. The primary controller 20 may distribute the computing configuration information respectively corresponding to the N computing cores 101 to the corresponding computing cores 101.

Each computing core 101 in the N computing cores 101 may obtain corresponding data and perform corresponding computation based on the computing configuration information distributed by the primary controller 20. In this way, each computing core 101 in the N computing cores 101 may complete some computing tasks in the target computing task, and the N computing cores 101 may complete the entire target computing task together, so as to obtain the target computing result corresponding to the target computing task.

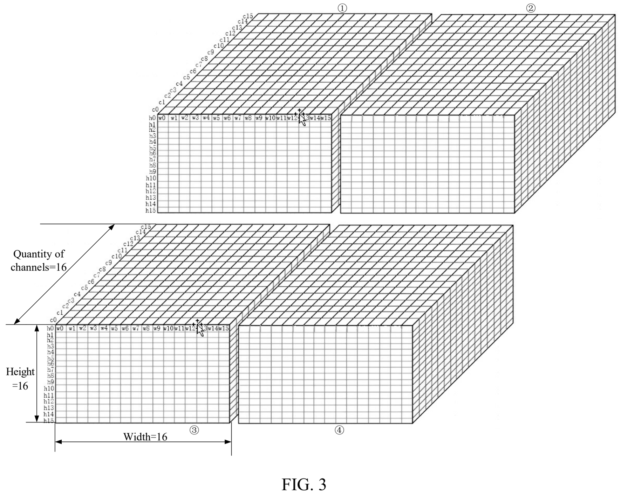

Optionally, the target computing result may be in a tensor form and may include four data dimensions, which respectively are a batch processing dimension, a height dimension, a width dimension, and a channel dimension. The batch processing dimension may also be referred to as a Batch dimension. The height dimension may also be referred to as a Height dimension or an H dimension. The width dimension may also be referred to as a Width dimension or a W dimension. The channel dimension may also be referred to as a Channel dimension or a C dimension. In an optional example, the target computing result may be shown in FIG. 3, where each of ①, ②, ③, and ④ in FIG. 3 corresponds to one batch, resulting in a total of 4 batches. Therefore, a size of the target computing result in the batch processing dimension is 4. In addition, each batch has a height of 16, a width of 16, and 16 channels. Therefore, the target computing result has a size of 16 in the height dimension, a size of 16 in the width dimension, and a size of 16 in the channel dimension. In another optional example, the target computing result has a size of 1 in the batch processing dimension, a size of 8 in the height dimension, a size of 6 in the width dimension, and a size of 3 in the channel dimension. In still another optional example, the target computing result has a size of 1 in the batch processing dimension, a size of 4 in the height dimension, a size of 4 in the width dimension, and a size of 20 in the channel dimension.

The case where the target computing result includes four data dimensions is described in the previous paragraph. In specific implementation, if the target computing task is a three-dimensional convolutional computing task or a grouped convolutional computing task, the target computing result may also include four or more data dimensions, such as five data dimensions or six data dimensions.

In the foregoing embodiments of this disclosure, the primary controller 20 may determine the at least two computing cores 101 for participating in the target computing task from the multi-core computing circuit 10, and distribute the corresponding computing configuration information to the at least two computing cores 101 based on the target computing task. Correspondingly, the at least two computing cores 101 may collaborate for computation based on the respective corresponding computing configuration information, to generate the target computing result corresponding to the target computing task. Thus, the target computing task is completed. To be specific, the primary controller 20 may schedule and control the at least two computing cores 101 in the multi-core computing circuit 10 through the distribution of the computing configuration information, so that the at least two computing cores 101 perform parallel computing and collaborative work to efficiently and quickly complete the target computing task, being beneficial for improving computational efficiency.

In some optional examples, as shown in FIG. 4, each computing core 101 in the at least two computing cores 101 may include a computing array 1011 and a buffer 1013. The computing array 1011 may be a hardware circuit for performing computing operations in the computing core 101, and the buffer 1013 may be a device for caching data in the computing core 101.

That the primary controller 20 is configured to generate computing configuration information respectively corresponding to the at least two computing cores 101 based on the target computing task may include:
the primary controller 20 is configured to determine a data size of input data corresponding to the target computing task, an array size of a respective computing array 1011 included in the at least two computing cores 101, and storage capacity of a respective buffer 1013 included in the at least two computing cores 101; determine target splitting strategy information for the target computing task based on the data size, the array sizes respectively corresponding to the at least two computing cores 101, and the storage capacity respectively corresponding to the at least two computing cores 101; and generate the computing configuration information respectively corresponding to the at least two computing cores 101 based on the target splitting strategy information.

Optionally, the multi-core computing circuit 10 includes, for example but is not limited to, a tensor computing circuit and a vector computing circuit. Correspondingly, the target computing task includes, for example but is not limited to, a tensor computing task and a vector computing task. For example, the tensor computing task includes a convolutional computing task. Taking a case where the multi-core computing circuit 10 is a tensor computing circuit and the target computing task is a convolutional computing task as an example, the input data corresponding to the target computing task includes, for example but is not limited to, an input tensor and input weight. The input tensor is a tensor on which convolution computation needs to be performed, and the input weight is weight used for the convolution computation for the input tensor. The data size of the input data includes, for example but is not limited to, a data size of the input tensor and a data size of the input weight.

Similar to the foregoing description of the target computing result, in some optional embodiments, the input tensor includes four data dimensions, which respectively are a batch processing dimension, a height dimension, a width dimension, and a channel dimension. In some other optional embodiments, the input tensor includes four or more data dimensions. For ease of understanding, description is made below by using a case where the input tensor includes four data dimensions. For example, the input tensor may be a tensor of a feature map type. Correspondingly, the data size of the input tensor may include sizes of the input data in the batch processing dimension, the height dimension, the width dimension, and the channel dimension. In an optional example, as shown in FIG. 5-1, the input tensor has a size of 1 in the batch processing dimension, a size of 4 in the height dimension, a size of 4 in the width dimension, and a size of 4 in the channel dimension.

Optionally, the input weight may include four data dimensions, which respectively are a height dimension, a width dimension, an input channel dimension, and an output channel dimension. The data size of the input weight may include sizes of the input weight in the height dimension, the width dimension, the input channel dimension, and the output channel dimension. The sizes of the input weight in the height dimension and the width dimension may limit a size of a convolution kernel (that is, a kernel size). The size of the input weight in the input channel dimension may be consistent with that of the input tensor in the channel dimension. The size of the input weight in the output channel dimension may be consistent with that of the target computing result in the channel dimension. The size of the input weight in the output channel dimension may also be understood as a quantity of convolution kernels. In an example, as shown in FIG. 5-2, the input weight has a size of 3 in the height dimension, a size of 3 in the width dimension, a size of 3 in the input channel dimension (equal to the size of the input tensor in the channel dimension), and a size of 4 in the output channel dimension (equal to the size of the target computing result in the channel dimension).

Optionally, the computing array 1011 may include four array dimensions, which respectively are a batch processing dimension, a height dimension, a width dimension, and a channel dimension. The array size of the computing array 1011 may include sizes of the computing array 1011 in the batch processing dimension, the height dimension, the width dimension, and the channel dimension. The array size of the computing array 1011 included in each computing core 101 may serve as the array size corresponding to that computing core 101. The array sizes corresponding to different computing cores 101 may be same or different.

Optionally, the storage capacity of the buffer 1013 is a size of a cache space of the buffer 1013. The storage capacity of the buffer 1013 included in each computing core 101 may serve as storage capacity corresponding to that computing core 101. The storage capacity corresponding to different computing cores 101 may be same or different.

The primary controller 20 determines the target splitting strategy information for the target computing task based on the data size of the input tensor, the data size of the input weight, array sizes respectively corresponding to the N computing cores 101, and storage capacity respectively corresponding to the N computing cores 101. The target splitting strategy information indicates a manner of splitting the target computing task into N sub-computing tasks in one-to-one correspondence to the N computing cores 101. The splitting of the target computing task herein may be either average splitting or non-average splitting.

For ease of understanding, description is made below by using a case where different computing cores 101 correspond to a same array size and same storage capacity, and the splitting of the target computing task is average splitting.

Optionally, the target splitting strategy information may have at least the following four cases.
(a1) The target splitting strategy information is splitting strategy information split along the output channel dimension of the input weight.
(a2) The target splitting strategy information is splitting strategy information split along the width dimension and/or the height dimension of the target computing result.
(a3) The target splitting strategy information is splitting strategy information split along the input channel dimension of the input weight.
(a4) The target splitting strategy information is splitting strategy information split along the batch processing dimension of the input tensor.

For the case (a1), assuming that the input weight is as shown in FIG. 5-2, since the size of the input weight in the output channel dimension is 4, if a value of N is 4, the target splitting strategy information may indicate that the input weight is split into four pieces of data, where each piece of the data includes all data located in one output channel of the input weight. If the value of N is 2, the target splitting strategy information may indicate that the input weight is split into two pieces of data, wherein each piece of the data includes all data located in two output channels of the input weight.

For the case (a2), assuming that the target computing result is as shown in FIG. 5-3, if a value of N is 2, the target splitting strategy information may indicate that the target computing result is split into two pieces of data along the width dimension, wherein one piece of the data includes all data located in a first column of the target computing result, and the other piece of the data includes all data located in a second column of the target computing result. Alternatively, if the value of N is 2, the target splitting strategy information may indicate that the target computing result is split into two pieces of data along the height dimension, where one piece of the data includes all data located in a first row of the target computing result, and the other piece of the data includes all data located in a second row of the target computing result. Further, if the value of N is 4, the target splitting strategy information may indicate that the target computing result is split into four pieces of data along the width dimension and the height dimension, wherein one piece of the data includes the data located in the first row and the first column of the target computing result, another piece of the data includes the data located in the first row and the second column of the target computing result, still another piece of the data includes the data located in the second row and the first column of the target computing result, and yet another piece of the data includes the data located in the second row and the second column of the target computing result.

For the case (a3), taking the input weight shown in FIG. 5-4 as an example, since the size of the input weight in the input channel dimension is 3, if the value of N is 3, the input weight may be split into three pieces of data, wherein each piece of the data includes all data located in one input channel of the input weight. For the case (a3), taking the input weight shown in FIG. 5-5 as an example, since the size of the input weight in the input channel dimension is 4, if the value of N is 2, the input weight may be split into two pieces of data, wherein each piece of the data includes all data located in two input channels of the input weight.

For the case (a4), taking the input tensor shown in FIG. 5-6 as an example, since the size of the input tensor in the batch processing dimension is 4, if the value of N is 4, the input tensor may be split into four pieces of data, wherein each piece of the data includes all data located in one batch of the input tensor. If the value of N is 2, the input tensor may be split into two pieces of data, wherein each piece of the data includes all data located in two batches of the input tensor.

Regardless of which of the foregoing four cases the target splitting strategy information is, the primary controller 20 may generate the computing configuration information respectively corresponding to the at least two computing cores 101 based on the target splitting strategy information. The implementation that the primary controller 20 generates the computing configuration information respectively corresponding to the at least two computing cores 101 based on the target splitting strategy information is described below by using examples.

It should be noted that in all implementations described below by using examples, the input data includes the input tensor and the input weight, and the computing system may further include a memory for storing the input tensor and the input weight. For example, the memory may be a double data rate (DDR) synchronous dynamic random access memory or a static random-access memory (SRAM) in the first chip.

In some optional implementations of this disclosure, that the primary controller 20 is configured to generate the computing configuration information respectively corresponding to the at least two computing cores 101 based on the target splitting strategy information may include:
the primary controller 20 is configured to, in response to that the target splitting strategy information is the splitting strategy information split along the output channel dimension of the input weight, determine first channel identifiers and first role information respectively corresponding to the at least two computing cores 101, wherein any one of the first channel identifiers corresponds to one output channel of the input weight, and any piece of the first role information indicates whether the corresponding computing core 101 is a first primary computing core that is configured to share the input tensor with other computing cores 101 except this computing core 101; and generate the computing configuration information respectively corresponding to the at least two computing cores 101 based on the first channel identifiers and the first role information respectively corresponding to the at least two computing cores 101.

Optionally, the target splitting strategy information may include a specific splitting parameter. If the target splitting strategy information is the splitting strategy information split along the output channel dimension of the input weight, the splitting parameter may include the first channel identifiers and the first role information respectively corresponding to the N computing cores 101. Any one of the first channel identifiers may be a channel ID of one output channel of the input weight. Any piece of the first role information may be in a numerical form, with a value of 1 indicating that the corresponding computing core 101 is the first primary computing core, or a value of 0 indicating that the corresponding computing core 101 is not the first primary computing core. The primary controller 20 may generate the computing configuration information respectively corresponding to the N computing cores 101 based on the first channel identifiers and the first role information respectively corresponding to the N computing cores 101. The computing configuration information corresponding to each computing core 101 in the N computing cores 101 may include the first channel identifier and the first role information corresponding to that computing core 101, and a first storage address of the input weight in the memory. The computing configuration information corresponding to the computing core 101 serving as the first primary computing core in the N computing cores 101 may also include a second storage address of the input tensor in the memory.

Correspondingly, that the at least two computing cores 101 are configured to collaborate for computation based on the respective corresponding computing configuration information, to generate a target computing result for the target computing task may include:
each computing core 101 in the at least two computing cores 101 is configured to obtain, based on the corresponding computing configuration information, data with the corresponding first channel identifier from the memory to serve as to-be-used weight;
each computing core 101 in the at least two computing cores 101 is configured to, in response to determining that this computing core 101 is the first primary computing core based on the corresponding computing configuration information, obtain the input tensor from the memory, use the obtained input tensor as a to-be-computed tensor, and share the obtained input tensor with other computing cores 101 except the first primary computing core; or each computing core 101 in the at least two computing cores 101 is configured to, in response to determining that this computing core 101 is not the first primary computing core based on the corresponding computing configuration information, obtain the input tensor shared by the first primary computing core, and use the input tensor shared by the first primary computing core as a to-be-computed tensor; and
each computing core 101 in the at least two computing cores 101 is configured to perform convolution computation on the to-be-computed tensor based on the corresponding to-be-used weight, to obtain a reference computing result, wherein the target computing result includes reference computing results respectively corresponding to the at least two computing cores 101.

As described above, the computing configuration information corresponding to each computing core 101 in the N computing cores 101 may include the first channel identifier and the first role information corresponding to that computing core 101, and the first storage address of the input weight in the memory. The computing configuration information corresponding to the computing core 101 serving as the first primary computing core in the N computing cores 101 may also include the second storage address of the input tensor in the memory. In this case, each computing core 101 in the N computing cores 101 may compute a third storage address of the data with the first channel identifier in the memory based on the corresponding channel identifier and the first storage address, and read the data from the third storage address of the memory through an external bus 30 shown in FIG. 4, to obtain the data with the first channel identifier to serve as the to-be-used weight corresponding to that computing core 101. Each computing core 101 in the N computing cores 101 may also determine, based on the corresponding first role information, whether that computing core 101 is the first primary computing core. When it is determined that that computing core 101 is the first primary computing core, that computing core 101 may read data from the second storage address of the memory through the external bus 30, to obtain the input tensor to serve as the to-be-computed tensor; and may also share the obtained input tensor with other N-1 computing cores 101 except that computing core 101 through the external bus 30 by means of broadcasting or in other manners. When it is determined that that computing core 101 is not the first primary computing core, that computing core 101 may obtain, through the external bus 30, the input tensor shared by the first primary computing core by means of broadcasting or in other manners; and may use the input tensor shared by the first primary computing core as the to-be-computed tensor. In this case, each computing core 101 in the N computing cores 101 obtains the corresponding to-be-used weight and the corresponding to-be-computed tensor (which is specifically the input tensor). The computing core 101 performs convolution computation on the to-be-computed tensor by using the corresponding to-be-used weight, to obtain the reference computing result.

In an optional example, the input tensor and the input weight are shown in FIG. 5-2, that is, the input weight has four output channels, where a first channel identifier for a first output channel may be B1, a first channel identifier for a second output channel may be B2, a first channel identifier for a third output channel may be B3, and a first channel identifier for a fourth output channel may be B4. The N computing cores 101 are specifically four computing cores 101, which are respectively represented as PE1, PE2, PE3, and PE4. Moreover, if the PE1 is used as the first primary computing core, the computing configuration information corresponding to the PE1 may include the B1, first role information for indicating that the PE1 is the first primary computing core, the first storage address, and the second storage address; the computing configuration information corresponding to the PE2 may include the B2, first role information for indicating that the PE2 is not the first primary computing core, and the first storage address; the computing configuration information corresponding to the PE3 may include the B3, first role information for indicating that the PE3 is not the first primary computing core, and the first storage address; and the computing configuration information corresponding to the PE4 may include the B4, first role information for indicating that the PE4 is not the first primary computing core, and the first storage address. In this way, based on the B1 and the first storage address in the computing configuration information corresponding to the PE1, the PE1 may obtain all data located in the first output channel of the input weight from the memory to serve as to-be-used weight 1 corresponding to the PE1. Based on the first role information in the computing configuration information corresponding to the PE1, the PE1 may determine that the PE 1 is the first primary computing core. In this case, the PE1 may obtain the input tensor from the memory based on the second storage address in the computing configuration information corresponding to the PE1 to serve as the to-be-computed tensor corresponding to the PE1. The PE1 may also share the input tensor with the PE2, the PE3, and the PE4 by means of broadcasting. Based on the B2 and the first storage address in the computing configuration information corresponding to the PE2, the PE2 may obtain all data located in the second output channel of the input weight from the memory to serve as the to-be-used weight corresponding to the PE2. Based on the first role information in the computing configuration information corresponding to the PE2, the PE2 may determine that the PE2 is not the first primary computing core. In this case, the PE2 may obtain the input tensor shared by the PE1 serving as the first primary computing core, and use the obtained input tensor as the to-be-computed tensor corresponding to the PE2. In a similar manner to the PE2, the PE3 may obtain all data located in the third output channel of the input weight from the memory to serve as the to-be-used weight corresponding to the PE3. The PE3 may also obtain the input tensor shared by the PE1 to serve as the to-be-computed tensor corresponding to the PE3. In a similar manner to the PE2, the PE4 may obtain all data located in the fourth output channel of the input weight from the memory to serve as the to-be-used weight corresponding to the PE4. The PE4 may also obtain the input tensor shared by the PE1 to serve as the to-be-computed tensor corresponding to the PE4.

The PE1 performs convolution computation on the input tensor that serves as the to-be-computed tensor by using the to-be-used weight 1, to obtain a reference computing result 1. The PE2 may perform convolution computation on the input tensor that serves as the to-be-computed tensor by using to-be-used weight 2, to obtain a reference computing result 2. The PE3 may perform convolution computation on the input tensor that serves as the to-be-computed tensor by using to-be-used weight 3, to obtain a reference computing result 3. The PE4 may perform convolution computation on the input tensor that serves as the to-be-computed tensor by using to-be-used weight 4, to obtain a reference computing result 4. The target computing result may include the reference computing result 1, the reference computing result 2, the reference computing result 3, and the reference computing result 4, where the reference computing result 1 may be located in a first channel of the target computing result, the reference computing result 2 may be located in a second channel of the target computing result, the reference computing result 3 may be located in a third channel of the target computing result, and the reference computing result 4 may be located in a fourth channel of the target computing result.

In view of the above, when the target splitting strategy information is the splitting strategy information split along the output channel dimension of the input weight, the computing configuration information respectively corresponding to the at least two computing cores 101 is generated based on the first channel identifiers and the first role information respectively corresponding to the at least two computing cores 101, and the generated computing configuration information is distributed to the corresponding computing cores 101. The data located in different output channels in the input weight may be distributed to different computing cores 101. Moreover, the first primary computing core may obtain the input tensor from the memory, and provide the input tensor to other computing cores 101 except the first primary computing core through inter-core sharing. In this way, each computing core 101 in the least two computing cores 101 may perform convolution computation on the input tensor based on the obtained to-be-used weight, to complete some computing tasks in the target computing task. The at least two computing cores 101 may complete the entire target computing task together, thereby improving computational efficiency. In addition, since only the first primary computing core obtains the input tensor from the memory, it is beneficial for alleviating access pressure of the memory and reducing an amount of data transmitted between the memory and the multi-core computing circuit 10.

In some other optional implementations of this disclosure, that the primary controller 20 is configured to generate the computing configuration information respectively corresponding to the at least two computing cores 101 based on the target splitting strategy information may include:
the primary controller 20 is configured to, in response to that the target splitting strategy information is the splitting strategy information split along the width dimension and/or the height dimension of the target computing result, determine area identifiers and second role information respectively corresponding to the at least two computing cores 101, wherein any one of the area identifiers corresponds to one area of the input tensor, and any piece of the second role information indicates whether the corresponding computing core 101 is a second primary computing core that is configured to share the input weight with other computing cores 101 except this computing core 101; and generate the computing configuration information respectively corresponding to the at least two computing cores 101 based on the area identifiers and the second role information respectively corresponding to the at least two computing cores 101.

Optionally, the target splitting strategy information includes a specific splitting parameter. If the target splitting strategy information is the splitting strategy information split along the width dimension and/or the height dimension of the target computing result, the splitting parameter may include the area identifiers and the second role information respectively corresponding to the N computing cores 101. Any one of the area identifiers may be an area index of an area of the input tensor, and the area index may include a batch ID to which the area belongs, row IDs of all rows in the area, column IDs of all columns in the area, and the like. Any piece of the second role information may be in a numerical form, with a value of 1 indicating that the corresponding computing core 101 is the second primary computing core, or a value of 0 indicating that the corresponding computing core 101 is not the second primary computing core. The primary controller 20 may generate the computing configuration information respectively corresponding to the N computing cores 101 based on the area identifiers and the second role information respectively corresponding to the N computing cores 101. The computing configuration information corresponding to each computing core 101 in the N computing cores 101 may include the area identifier and the second role information corresponding to that computing core 101, and the second storage address of the input tensor in the memory. The computing configuration information corresponding to the computing core 101 serving as the second primary computing core in the N computing cores 101 may also include the first storage address of the input weight in the memory.

Correspondingly, that the at least two computing cores 101 are configured to collaborate for computation based on the respective corresponding computing configuration information, to generate a target computing result for the target computing task may include:
each computing core 101 in the at least two computing cores 101 is configured to obtain, based on the corresponding computing configuration information, at least a part of data with the corresponding area identifier from the memory, and determine a to-be-computed tensor based on the obtained at least a part of data;
each computing core 101 in the at least two computing cores 101 is configured to, in response to determining that this computing core 101 is the second primary computing core based on the corresponding computing configuration information, obtain the input weight from the memory, and share the obtained input weight with other computing cores 101 except this computing core 101; or each computing core 101 in the at least two computing cores 101 is configured to, in response to determining that this computing core 101 is not the second primary computing core based on the corresponding computing configuration information, obtain the input weight shared by the second primary computing core, and use the input weight shared by the second primary computing core as to-be-used weight; and
each computing core 101 in the at least two computing cores 101 is configured to perform convolution computation on the corresponding to-be-computed tensor based on the to-be-used weight, to obtain a reference computing result, wherein the target computing result includes reference computing results respectively corresponding to the at least two computing cores 101.

As described above, the computing configuration information corresponding to each computing core 101 in the N computing cores 101 may include the area identifier and the second role information corresponding to that computing core 101, and the second storage address of the input tensor in the memory. The computing configuration information corresponding to the computing core 101 serving as the second primary computing core in the N computing cores 101 may also include the first storage address of the input weight in the memory. In this case, each computing core 101 in the N computing cores 101 may compute a fourth storage address of the data with this area identifier in the memory based on the corresponding area identifier and the second storage address, and read the data from the fourth storage address of the memory through the external bus 30 shown in FIG. 4, to obtain the data with this area identifier (which is specifically all of the data with this area identifier) to serve as the to-be-computed tensor corresponding to that computing core 101. Each computing core 101 in the N computing cores 101 may also determine, based on the corresponding second role information, whether that computing core 101 is the second primary computing core. When it is determined that that computing core 101 is the second primary computing core, that computing core 101 may read data from the first storage address of the memory to obtain the input weight as the to-be-used weight; and may also share the obtained input weight with other N-1 computing cores 101 except that computing core 101 through the external bus 30 by means of broadcasting or in other manners. When it is determined that that computing core 101 is not the second primary computing core, that computing core 101 may obtain, through the external bus 30, the input weight shared by the second primary computing core by means of broadcasting or in other manners; and may use the input weight shared by the second primary computing core as the to-be-used weight. In this case, each computing core 101 in the N computing cores 101 successfully obtains the corresponding to-be-used weight (which is specifically the input weight) and the corresponding to-be-computed tensor. The computing core 101 performs convolution computation on the corresponding to-be-computed tensor by using the to-be-used weight, to obtain the reference computing result.

In an optional example, if the input tensor and the input weight are as shown in FIG. 5-3, to obtain the target computing result, four weighted average calculations are required. Nine elements (X11, X12, X13, X21, X22, X23, X31, X32, and X33) located in an upper left corner of the input tensor are used for a first weighted average calculation, nine elements (X12, X13, X14, X22, X23, X24, X32, X33, and X34) located in an upper right corner of the input tensor are used for a second weighted average calculation, nine elements (X21, X22, X23, X31, X32, X33, X41, X42, and X43) located in a bottom left corner of the input tensor are used for a third weighted average calculation, and nine elements (X22, X23, X24, X32, X33, X34, X42, X43, and X44) located in a bottom right corner of the input tensor are used for a fourth weighted average calculation. An area identifier for an area occupied by the nine elements located in the upper left corner of the input tensor may be S1, an area identifier for an area occupied by the nine elements located in the upper right corner of the input tensor may be S2, an area identifier for an area occupied by the nine elements located in the lower left corner of the input tensor may be S3, and an area identifier for an area occupied by the nine elements located in the lower right corner of the input tensor may be S4. The N computing cores 101 are specifically four computing cores 101, which are respectively represented as PE1, PE2, PE3, and PE4. Moreover, if the PE2 is used as the first primary computing core, the computing configuration information corresponding to the PE1 may include the S1, second role information for indicating that the PE1 is not the second primary computing core, and the second storage address; the computing configuration information corresponding to the PE2 may include the S2, second role information for indicating that the PE2 is the second primary computing core, the second storage address, and the first storage address; the computing configuration information corresponding to the PE3 may include the S3, second role information for indicating that the PE3 is not the second primary computing core, and the second storage address; and the computing configuration information corresponding to the PE4 may include the S4, second role information for indicating that the PE4 is not the second primary computing core, and the second storage address. In this way, based on the S2 and the second storage address in the computing configuration information corresponding to the PE2, the PE2 may obtain the nine elements located in the upper right corner of the input tensor from the memory to serve as a to-be-computed tensor 2 corresponding to the PE2. Based on the second role information in the computing configuration information corresponding to the PE2, the PE2 may determine that the PE2 is the second primary computing core. In this case, the PE2 may obtain the input weight from the memory based on the first storage address in the computing configuration information corresponding to the PE2 to serve as the to-be-used weight corresponding to the PE2. The PE2 may also share the input weight with the PE1, the PE3, and the PE4 by means of broadcasting. Based on the S1 and the second storage address in the computing configuration information corresponding to the PE1, the PE1 may obtain the nine elements located in the upper left corner of the input tensor from the memory to serve as a to-be-computed tensor 1 corresponding to the PE1. Based on the second role information in the computing configuration information corresponding to the PE1, the PE1 may determine that the PE1 is not the second primary computing core. In this case, the PE1 may also obtain the input weight shared by the PE2 that serves as the second primary computing core, and use the obtained input weight as the to-be-used weight corresponding to the PE1. In a similar manner to the PE1, the PE3 may obtain the nine elements located in the bottom left corner of the input tensor from the memory to serve as a to-be-computed tensor 3 corresponding to the PE3. The PE3 may also obtain the input weight shared by the PE2 to serve as the to-be-used weight corresponding to the PE3. In a similar manner to the PE1, the PE4 may obtain the nine elements located in the bottom right corner of the input tensor from the memory to serve as a to-be-computed tensor 4 corresponding to the PE4. The PE4 may also obtain the input weight shared by the PE2 to serve as the to-be-used weight corresponding to the PE4.

The PE1 may perform convolution computation on the to-be-computed tensor 1 by using the input weight serving as the to-be-used weight, to obtain a reference computing result 1 (which may be P11 in FIG. 5-3). The PE2 may perform convolution computation on the to-be-computed tensor 2 by using the input weight serving as the to-be-used weight, to obtain a reference computing result 2 (which may be P12 in FIG. 5-3). The PE3 may perform convolution computation on the to-be-computed tensor 3 by using the input weight serving as the to-be-used weight, to obtain a reference computing result 3 (which may be P21 in FIG. 5-3). The PE4 may perform convolution computation on the to-be-computed tensor 4 by using the input weight serving as the to-be-used weight, to obtain a reference computing result 4 (which may be P22 in FIG. 5-3). The target computing result may include the reference computing result 1, the reference computing result 2, the reference computing result 3, and the reference computing result 4, where the reference computing result 1 may be located in the first row and the first column of the target computing result, the reference computing result 2 may be located in the first row and the second column of the target computing result, the reference computing result 3 may be located in the second row and the first column of the target computing result, and the reference computing result 4 may be located in the second row and the second column of the target computing result.

In view of the above, when the target splitting strategy information is the splitting strategy information split along the width dimension and/or the height dimension of the target computing result, the computing configuration information respectively corresponding to the at least two computing cores 101 is generated based on the area identifiers and the second role information respectively corresponding to the at least two computing cores 101, and the generated computing configuration information is distributed to the corresponding computing cores 101. The data located in different areas in the input tensor may be distributed to different computing cores 101. Moreover, the second primary computing core may read the input weight from the memory, and provide the input weight to other computing cores 101 except the second primary computing core through inter-core sharing. In this way, each computing core 101 in the least two computing cores 101 may perform convolution computation on the obtained to-be-computed tensor based on the input weight, to complete some computing tasks in the target computing task. The at least two computing cores 101 may complete the entire target computing task together, thereby improving computational efficiency. In addition, since only the second primary computing core 101 obtains the input weight from the memory, it is beneficial for alleviating access pressure of the memory and reducing an amount of data transmitted between the memory and the multi-core computing circuit 10.

In still some other optional implementations of this disclosure, that the primary controller 20 is configured to generate the computing configuration information respectively corresponding to the at least two computing cores 101 based on the target splitting strategy information may include:
the primary controller 20 is configured to, in response to that the target splitting strategy information is the splitting strategy information split along the input channel dimension of the input weight, determine third channel identifiers, second channel identifiers, and third role information respectively corresponding to the at least two computing cores 101, where any one of the third channel identifiers corresponds to one input channel of the input weight, any one of the second channel identifiers corresponds to one channel of the input tensor, and any piece of the third role information indicates whether the corresponding computing core 101 is a third primary computing core that is configured to generate the target computing result; and generate the computing configuration information respectively corresponding to the at least two computing cores 101 based on the third channel identifiers, the second channel identifiers, and the third role information respectively corresponding to the at least two computing cores 101.

Optionally, the target splitting strategy information may include a specific splitting parameter. If the target splitting strategy information is the splitting strategy information split along the input channel dimension of the input weight, the splitting parameter may include the third channel identifiers, the second channel identifiers, and the third role information respectively corresponding to the N computing cores 101. Any one of the third channel identifiers may be a channel ID of one input channel of the input weight. Any one of the second channel identifiers may be a channel ID of one channel of the input tensor. Any piece of the third role information may be in a numerical form, with a value of 1 indicating that the corresponding computing core 101 is the third primary computing core, or a value of 0 indicating that the corresponding computing core 101 is not the third primary computing core. The primary controller 20 may generate the computing configuration information respectively corresponding to the N computing cores 101 based on the third channel identifiers, the second channel identifiers, and the third role information respectively corresponding to the N computing cores 101. The computing configuration information corresponding to each computing core 101 in the N computing cores 101 may include the third channel identifier, the second channel identifier, and the third role information corresponding to that computing core, the first storage address of the input weight in the memory, and the second storage address of the input tensor in the memory.

Correspondingly, that the at least two computing cores 101 are configured to collaborate for computation based on the respective corresponding computing configuration information, to generate a target computing result for the target computing task may include:
each computing core 101 in the at least two computing cores 101 is configured to obtain, based on the corresponding computing configuration information, data with the corresponding third channel identifier from the memory to serve as to-be-used weight;
each computing core 101 in the at least two computing cores 101 is configured to obtain, based on the corresponding computing configuration information, data with the corresponding second channel identifier from the memory to serve as a to-be-computed tensor;
each computing core 101 in the at least two computing cores 101 is configured to perform convolution computation on the corresponding to-be-computed tensor based on the corresponding to-be-used weight, to obtain a reference computing result; and
each computing core 101 in the at least two computing cores 101 is configured to, in response to determining that this computing core 101 is the third primary computing core based on the corresponding computing configuration information, obtain reference computing results corresponding to other computing cores 101 except the third primary computing core, and add up all the reference computing results at a corresponding position to generate the target computing result.

As described above, the computing configuration information corresponding to each computing core 101 in the N computing cores 101 may include the third channel identifier, the second channel identifier, and the third role information corresponding to that computing core, the first storage address of the input weight in the memory, and the second storage address of the input tensor in the memory. In this case, each computing core 101 in the N computing cores 101 may compute a fifth storage address of the data with the third channel identifier in the memory based on the corresponding third channel identifier and the first storage address, and read the data from the fifth storage address of the memory through the external bus 30 shown in FIG. 4, to obtain the data with the third channel identifier to serve as the to-be-used weight. Each computing core 101 in the N computing cores 101 may further determine a sixth storage address of the data with the second channel identifier in the memory based on the corresponding second channel identifier and the second storage address, and read the data from the sixth storage address of the memory through the external bus 30 shown in FIG. 4, to obtain the data with the second channel identifier to serve as the to-be-computed tensor. Each computing core 101 in the N computing cores 101 may perform convolution computation on the corresponding to-be-computed tensor by using the corresponding to-be-used weight, to obtain the reference computing result. In addition, each computing core 101 in the N computing cores 101 may also determine, based on the corresponding third role information, whether that computing core 101 is the third primary computing core. When it is determined that that computing core 101 is the third primary computing core, that computing core 101 may collect reference computing results respectively corresponding to other N-1 computing cores 101 except the third primary computing core. Along with the reference computing result corresponding to the computing core 101 serving as the third primary computing core, there may be a total of N reference computing results. That computing core 101 may add up the N reference computing results at the corresponding position to generate the target computing result.

In an optional example, the input tensor and the input weight are shown in FIG. 5-4, that is, the input weight has three input channels, wherein a third channel identifier for a first input channel may be C1, a third channel identifier for a second input channel may be C2, and a third channel identifier for a third input channel may be C3. The input tensor has three channels, where a second channel identifier for a first channel may be D1, a second channel identifier for a second channel may be D2, and a second channel identifier for a third channel may be D3. The N computing cores 101 are specifically three computing cores 101, which are respectively represented as PE1, PE2, and PE3. Moreover, if the PE3 is the third primary computing core, the computing configuration information corresponding to the PE1 may include the C1 and the D1, third role information for indicating that the PE1 is not the third primary computing core, the first storage address, and the second storage address; the computing configuration information corresponding to the PE2 may include the C2 and the D2, third role information for indicating that the PE2 is not the third primary computing core, the first storage address, and the second storage address; and the computing configuration information corresponding to the PE3 may include the C3 and the D3, third role information for indicating that the PE3 is the third primary computing core, the first storage address, and the second storage address. In this way, based on the C1 and the first storage address in the computing configuration information corresponding to the PE1, the PE1 may obtain data located in the first input channel of the input weight from the memory to serve as to-be-used weight 1 corresponding to the PE1. Based on the D1 and the second storage address in the computing configuration information corresponding to the PE1, the PE1 may obtain data located in the first channel of the input tensor from the memory to serve as a to-be-computed tensor 1 corresponding to the PE1. In a similar manner to the PE1, the PE2 may obtain data located in the second input channel of the input weight from the memory to serve as to-be-used weight 2 corresponding to the PE2, and obtain data located in the second channel of the input tensor from the memory to serve as a to-be-computed tensor 2 corresponding to the PE2. In a similar manner to the PE1, the PE3 may obtain data located in the third input channel of the input weight from the memory to serve as to-be-used weight 3 corresponding to the PE3, and obtain data located in the third channel of the input tensor from the memory to serve as a to-be-computed tensor 3 corresponding to the PE3.

The PE1 may perform convolution computation on the to-be-computed tensor 1 by using the to-be-used weight 1, to obtain the reference computing result 1. The PE2 may perform convolution computation on the to-be-computed tensor 2 by using the to-be-used weight 2, to obtain the reference computing result 2. The PE3 may perform convolution computation on the to-be-computed tensor 3 by using the to-be-used weight 3, to obtain the reference computing result 3.

Based on the third role information in the computing configuration information corresponding to the PE1, the PE1 may determine that the PE1 is not the third primary computing core; based on the third role information in the computing configuration information corresponding to the PE2, the PE2 may determine that the PE2 is not the third primary computing core; and based on the third role information in the computing configuration information corresponding to the PE3, the PE3 may determine that the PE3 is the third primary computing core. In this case, the PE1 may actively send the reference computing result 1 to the PE3; the PE2 may actively send the reference computing result 2 to the PE3; and the PE3 may actively obtain the reference computing result 1 from the PE1, and actively obtain the reference computing result 2 from the PE2. In this way, the PE3 may simultaneously have the reference computing result 1, the reference computing result 2, and the reference computing result 3, and may add the reference computing result 1, the reference computing result 2, and the reference computing result 3 at the corresponding position to generate the target computing result.

In view of the above, when the target splitting strategy information is the splitting strategy information split along the input channel dimension of the input weight, the computing configuration information respectively corresponding to the at least two computing cores 101 is generated based on the third channel identifiers, the second channel identifiers, and the third role information respectively corresponding to the at least two computing cores 101, and the generated computing configuration information is distributed to the corresponding computing cores 101. The data located in different input channels in the input weight may be distributed to different computing cores 101, and the data located in different channels in the input tensor may be distributed to different computing cores 101. In this way, each computing core 101 in the at least two computing cores 101 may perform convolution computation on the obtained to-be-computed tensor based on the obtained to-be-used weight, to obtain the reference computing result. Moreover, the third primary computing core may aggregate the reference computing results, and obtain the target computing result through a summation operation at the corresponding position. In this way, each computing core 101 in the at least two computing cores 101 may complete some computing tasks in the target computing task, and the at least two computing cores 101 may complete the entire target computing task together, so as to improve the computational efficiency.

In yet some other optional implementations of this disclosure, that the primary controller 20 is configured to generate the computing configuration information respectively corresponding to the at least two computing cores 101 based on the target splitting strategy information may include:
the primary controller 20 is configured to, in response to that the target splitting strategy information is the splitting strategy information split along the batch processing dimension of the input tensor, determine batch identifiers and second role information respectively corresponding to the at least two computing cores 101, wherein any one of the batch identifiers corresponds to one batch of the input tensor, and any piece of the second role information indicates whether the corresponding computing core 101 is a second primary computing core that is configured to share the input weight with other computing cores 101 except this computing core 101; and generate the computing configuration information respectively corresponding to the at least two computing cores 101 based on the batch identifiers and the second role information respectively corresponding to the at least two computing cores 101.

Optionally, the target splitting strategy information may include a specific splitting parameter. If the target splitting strategy information is the splitting strategy information split along the batch processing dimension of the input tensor, the splitting parameter may include the batch identifiers and the second role information respectively corresponding to the N computing cores 101. Any one of the batch identifiers may be a batch ID of one batch in the input tensor. As described above, any piece of the second role information may be in a numerical form. The primary controller 20 may generate the computing configuration information respectively corresponding to the N computing cores 101 based on the batch identifiers and the second role information respectively corresponding to the N computing cores 101. The computing configuration information corresponding to each computing core 101 in the N computing cores 101 may include the batch identifier and the second role information corresponding to that computing core 101, and the second storage address of the input tensor in the memory. The computing configuration information corresponding to the computing core 101 serving as the second primary computing core in the N computing cores 101 may also include the first storage address of the input weight in the memory.

Correspondingly, that the at least two computing cores 101 are configured to collaborate for computation based on the respective corresponding computing configuration information, to generate a target computing result for the target computing task may include:
each computing core 101 in the at least two computing cores 101 is configured to obtain, based on the corresponding computing configuration information, data with the corresponding batch identifier from the memory to serve as a to-be-computed tensor;
each computing core 101 in the at least two computing cores 101 is configured to, in response to determining that this computing core 101 is the second primary computing core based on the corresponding computing configuration information, obtain the input weight from the memory, and share the obtained input weight with other computing cores 101 except the second primary computing core; or each computing core 101 in the at least two computing cores 101 is configured to, in response to determining that this computing core 101 is not the second primary computing core based on the corresponding computing configuration information, obtain the input weight shared by the second primary computing core, and use the input weight shared by the second primary computing core as to-be-used weight; and
each computing core 101 in the at least two computing cores 101 is configured to perform convolution computation on the corresponding to-be-computed tensor based on the to-be-used weight, to obtain a reference computing result, wherein the target computing result includes reference computing results respectively corresponding to the at least two computing cores 101.

As described above, the computing configuration information corresponding to each computing core 101 in the N computing cores 101 may include the batch identifier and the second role information corresponding to that computing core 101, and the second storage address of the input tensor in the memory. The computing configuration information corresponding to the computing core 101 serving as the second primary computing core in the N computing cores 101 may also include the first storage address of the input weight in the memory. In this case, each computing core 101 in the N computing cores 101 may compute a seventh storage address of the data with this batch identifier in the memory based on the corresponding batch identifier and the second storage address, and read the data from the seventh storage address of the memory through the external bus 30 shown in FIG. 4, to obtain the data with this batch identifier to serve as the to-be-computed tensor corresponding to that computing core 101. Each computing core 101 in the N computing cores 101 may also determine, based on the corresponding second role information, whether that computing core 101 is the second primary computing core. When it is determined that that computing core 101 is the second primary computing core, that computing core 101 may read data from the first storage address of the memory to obtain the input weight as the to-be-used weight; and may also share the obtained input weight with other N-1 computing cores 101 except that computing core 101 through the external bus 30 by means of broadcasting or in other manners. When it is determined that that computing core 101 is not the second primary computing core, that computing core 101 may obtain, through the external bus 30, the input weight shared by the second primary computing core by means of broadcasting or in other manners; and may use the input weight shared by the second primary computing core as the to-be-used weight. In this case, each computing core 101 in the N computing cores 101 successfully obtains the corresponding to-be-used weight (which is specifically the input weight) and the corresponding to-be-computed tensor. The computing core 101 may perform convolution computation on the corresponding to-be-computed tensor by using the to-be-used weight, to obtain the reference computing result.

In an example, the input tensor is as shown in FIG. 5 and FIG. 6, that is, the input tensor has four batches, wherein a batch identifier for a first batch may be Q1, a batch identifier for a second batch may be Q2, a batch identifier for a third batch may be Q3, and a batch identifier for a fourth batch may be Q4. The N computing cores 101 are specifically four computing cores 101, which are respectively represented as PE1, PE2, PE3, and PE4. Moreover, if the PE4 is used as the second primary computing core, the computing configuration information corresponding to the PE1 may include the Q1, second role information for indicating that the PE1 is not the second primary computing core, and the second storage address; the computing configuration information corresponding to the PE2 may include the Q2, second role information for indicating that the PE2 is not the second primary computing core, and the second storage address; the computing configuration information corresponding to the PE3 may include the Q3, second role information for indicating that the PE3 is not the second primary computing core, and the second storage address; and the computing configuration information corresponding to the PE4 may include the Q4, second role information for indicating that the PE4 is the second primary computing core, the second storage address, and the first storage address. In this way, based on the Q4 and the second storage address in the computing configuration information corresponding to the PE4, the PE4 may obtain data located in the four batches of the input tensor from the memory to serve as a to-be-computed tensor 4 corresponding to the PE4. Based on the second role information in the computing configuration information corresponding to the PE4, the PE4 may determine that the PE4 is the second primary computing core. In this case, the PE4 may obtain the input weight from the memory based on the first storage address in the computing configuration information corresponding to the PE4 to serve as the to-be-used weight corresponding to the PE4. The PE4 may also share the input weight with the PE1, the PE2, and the PE3 by means of broadcasting. Based on the Q1 and the second storage address in the computing configuration information corresponding to the PE1, the PE1 may obtain the data located in the first batch of the input tensor from the memory to serve as a to-be-computed tensor 1 corresponding to the PE1. Based on the second role information in the computing configuration information corresponding to the PE1, the PE1 may determine that the PE1 is not the second primary computing core. In this case, the PE1 may further obtain the input weight shared by the PE4 serving as the second primary computing core, and use the obtained input weight as the to-be-used weight corresponding to the PE1. In a similar manner to the PE1, the PE2 may obtain the data located in the second batch of the input tensor from the memory to serve as a to-be-computed tensor 2 corresponding to the PE2. The PE2 may also obtain the input weight shared by the PE4 to serve as the to-be-used weight corresponding to the PE2. In a similar manner to the PE1, the PE3 may obtain the data located in the third batch of the input tensor from the memory to serve as a to-be-computed tensor 3 corresponding to the PE3. The PE3 may also obtain the input weight shared by the PE4 to serve as the to-be-used weight corresponding to the PE3.

The PE1 may perform convolution computation on the to-be-computed tensor 1 by using the input weight serving as the to-be-used weight, to obtain a reference computing result 1. The PE2 may perform convolution computation on the to-be-computed tensor 2 by using the input weight serving as the to-be-used weight, to obtain a reference computing result 2. The PE3 may perform convolution computation on the to-be-computed tensor 3 by using the input weight serving as the to-be-used weight, to obtain a reference computing result 3. The PE4 may perform convolution computation on the to-be-computed tensor 4 by using the input weight serving as the to-be-used weight, to obtain a reference computing result 4. The target computing result may include the reference computing result 1, the reference computing result 2, the reference computing result 3, and the reference computing result 4, wherein the reference computing result 1 may be located in a first batch of the target computing result, the reference computing result 2 may be located in a second batch of the target computing result, the reference computing result 3 may be located in a third batch of the target computing result, and the reference computing result 4 may be located in a fourth batch of the target computing result.

In view of the above, when the target splitting strategy information is the splitting strategy information split along the batch processing dimension of the input tensor, the computing configuration information respectively corresponding to the at least two computing cores 101 is generated based on the batch identifiers and the second role information respectively corresponding to the at least two computing cores 101, and the generated computing configuration information is distributed to the corresponding computing cores 101. The data located in different batches in the input tensor may be distributed to different computing cores 101. Moreover, the second primary computing core may obtain the input weight from the memory, and provide the input weight to other computing cores 101 except the second primary computing core through inter-core sharing. In this way, each computing core 101 in the least two computing cores 101 may perform convolution computation on the obtained to-be-computed tensor based on the input weight, to complete some computing tasks in the target computing task. The at least two computing cores 101 may complete the entire target computing task together, thereby improving computational efficiency. In addition, since only the second primary computing core 101 obtains the input weight from the memory, it is beneficial for alleviating access pressure of the memory and reducing an amount of data transmitted between the memory and the multi-core computing circuit 10.

It should be noted that regardless of which of the foregoing cases the target splitting strategy information meets, the N computing cores 101 may compute in parallel and work collaboratively to efficiently and quickly complete the target computing task, being beneficial for improving the computational efficiency. In this case, a splitting manner for computing tasks may be selected according to the computing tasks that actually need to be executed, with high flexibility.

In some optional examples, if the target splitting strategy information meets the case (a2) described above, the at least two computing cores 101 may include a first computing core and a second computing core, the area identifier corresponding to the first computing core is represented as a first area identifier, and the area identifier corresponding to the second computing core is represented as a second area identifier.

That the primary controller 20 is configured to generate the computing configuration information respectively corresponding to the at least two computing cores 101 based on the area identifiers and the second role information respectively corresponding to the at least two computing cores 101 may include:
the primary controller 20 is configured to determine shared configuration information between the first computing core and the second computing core in response to that there is an overlapping part between data respectively corresponding to the first area identifier and the second area identifier in the input tensor, wherein the shared configuration information indicates that one of the first computing core and the second computing core shares partial data corresponding to the overlapping part with the other one; and generate the computing configuration information respectively corresponding to the first computing core and the second computing core based on the first area identifier, the second area identifier, the shared configuration information, and the second role information respectively corresponding to the first computing core and the second computing core.

It may be learned from the foregoing description about FIG. 5-3 that, there may be overlapping parts between data respectively corresponding to different area identifiers. For example, there is an overlapping part between the area with the area identified S1 and the area with the area identified S2, including the elements X12, X13, X22, X23, X32, and X33. For another example, there is an overlapping part between the area with the area identified S1 and the area with the area identified S3, including the elements X21, X22, X23, X31, X32, and X33.

Assuming that the first computing core is PE1 and the second computing core is PE2, the primary controller 20 may set whether the partial data corresponding to the overlapping part (that is, X12, X13, X22, X23, X32, and X33) is shared by the PE1 to the PE2 or by the PE2 to the PE1. On this basis, shared configuration information between the PE1 and the PE2 may be generated. Herein, that the PE1 shares the partial data with the PE2 may be either that the PE1 actively transmits the partial data to the PE2, or the P1 passively transmits the partial data to the PE2 in response to a data obtaining request from the PE2. The situation where the PE2 shares the partial data with the PE1 is similar, and details are not described herein.

Taking a situation where the shared configuration information indicates that the first computing core shares the partial data corresponding to the overlapping part with the second computing core as an example, that each computing core 101 in the at least two computing cores 101 is configured to obtain, based on the corresponding computing configuration information, at least a part of data with the corresponding area identifier from the memory, and determine a to-be-computed tensor based on the obtained at least a part of data may include:
the first computing core is configured to obtain all the data with the corresponding area identifier from the memory based on the corresponding computing configuration information, determine the obtained all data as the to-be-computed tensor, and share the partial data in the obtained all data with the second computing core; and
the second computing core is configured to obtain data other than the partial data in the data with the corresponding area identifier from the memory based on the corresponding computing configuration information, obtain the partial data shared by the first computing core, and determine the to-be-computed tensor that includes the data obtained from the memory and the partial data shared by the first computing core.

Herein, the computing configuration information respectively corresponding to the first computing core and the second computing core may both include the shared configuration information. The computing configuration information respectively corresponding to the first computing core and the second computing core may further include other information. For details, reference may be made to the relevant description of the computing configuration information when the target splitting strategy information meets the case (a2) described above, and details are not described herein.

The first computing core may obtain all the data with the corresponding area identifier from the memory in the manner described above based on the corresponding computing configuration information, and determine the all obtained data as the to-be-computed tensor. Moreover, under instruction of the shared configuration information in the computing configuration information, the first computing core may also share the partial data (corresponding to the overlapping part described above) in the all obtained data with the second computing core through the external bus 30 shown in FIG. 4.

For the second computing core, under instruction of the shared configuration information in the corresponding computing configuration information, the second computing core may not need to obtain all the data with the corresponding area identifier from the memory, but may obtain the partial data shared by the first computing core and only obtain the data other than the partial data in the all data from the memory. In this way, the to-be-computed tensor corresponding to the second computing core may be obtained. In other words, some of the data in the to-be-computed tensor corresponding to the second computing core comes from the first computing core, while the other part comes from the memory.

In an example, the first computing core is the PE1 and the second computing core is the PE2. Based on the computing configuration information corresponding to the PE1, the PE1 may obtain all data (that is, X11, X12, X13, X21, X22, X23, X31, X32, and X33) in the area corresponding to the area identifier S1 from the memory, and may also share the partial data (that is, X12, X13, X22, X23, X32, and X33) of the overlapping part between the area corresponding to the area identifier S1 and the area corresponding to the area identifier S2 with the PE2. In this way, based on the computing configuration information corresponding to the PE2, the PE2 may obtain the partial data shared by the PE1, and may also obtain data other than the partial data (that is, X14, X24, and X34) in the data in the area corresponding to the area identifier S2 from the memory.

In this implementation, when there is an overlapping part between the data respectively corresponding to the first area identifier and the second area identifier in the input tensor, the computing configuration information respectively corresponding to the first computing core and the second computing core is generated based on the first area identifier, the second area identifier, the shared configuration information, and the second role information respectively corresponding to the first computing core and the second computing core, so that the computing configuration information respectively corresponding to the first computing core and the second computing core can both include the shared configuration information. Under instruction of the shared configuration information, the first computing core may share the partial data with the second computing core, which does not need to obtain all the data in the area corresponding to the second area identifier from the memory. This is beneficial for reducing the access pressure of the memory, reducing the amount of the data transmitted between the memory and the multi-core computing circuit 10, and enhancing collaboration between the first computing core and the second computing core.

In specific implementation, the shared configuration information may also indicate that the second computing core shares the partial data corresponding to the overlapping part with the first computing core. In this case, the second computing core is configured to obtain all the data with the corresponding area identifier from the memory based on the corresponding computing configuration information, determine the obtained all data as the to-be-computed tensor, and share the partial data in the obtained all data with the first computing core. The first computing core is configured to obtain data other than the partial data in the data with the corresponding area identifier from the memory based on the corresponding computing configuration information, obtain the partial data shared by the second computing core, and determine the to-be-computed tensor that includes the data obtained from the memory and the partial data shared by the first computing core.

It may be learned that the introduction of the shared configuration information is beneficial for improving collaboration between different computing cores 101, thereby further improving the computational efficiency.

In some embodiments, the shared configuration information may not be introduced. In this way, each computing core 101 in the N computing cores 101 may obtain, based on the corresponding computing configuration information, all the data with the corresponding area identifier from the memory to serve as the to-be-computed tensor.

In some optional examples, that the primary controller 20 is configured to determine target splitting strategy information for the target computing task based on the data size, the array sizes respectively corresponding to the at least two computing cores 101, and the storage capacity respectively corresponding to the at least two computing cores 101 may include:
the primary controller 20 is configured to determine at least two estimated execution periods corresponding to at least two pieces of reference splitting strategy information for the target computing task based on the data size, the array sizes respectively corresponding to the at least two computing cores 101, and the storage capacity respectively corresponding to the at least two computing cores 101; and determine the target splitting strategy information from the at least two pieces of reference splitting strategy information based on the at least two estimated execution periods.

Optionally, the at least two pieces of reference splitting strategy information may be represented as U pieces of reference splitting strategy information, wherein U is an integer greater than or equal to 2. The U pieces of reference splitting strategy information includes, for example but is not limited to, a first type of reference splitting strategy information split along the output channel dimension of the input weight, a second type of reference splitting strategy information split along the width dimension and/or the height dimension of the target computing result, a third type of reference splitting strategy information split along the input channel dimension of the input weight, and a fourth type of reference splitting strategy information split along the batch processing dimension of the input tensor.

Herein, there may be one or more pieces of reference splitting strategy information in the first type of reference splitting strategy information. For any piece of reference splitting strategy information in the first type of reference splitting strategy information, reference may be made to the foregoing relevant description of the target splitting strategy information that meets the case (a1) described above, and details are not described herein.

Herein, there may be one or more pieces of reference splitting strategy information in the second type of reference splitting strategy information. For any piece of reference splitting strategy information in the second type of reference splitting strategy information, reference may be made to the foregoing relevant description of the target splitting strategy information that meets the case (a2) described above, and details are not described herein.

Herein, there may be one or more pieces of reference splitting strategy information in the third type of reference splitting strategy information. For any piece of reference splitting strategy information in the third type of reference splitting strategy information, reference may be made to the foregoing relevant description of the target splitting strategy information that meets the case (a3) described above, and details are not described herein.

Herein, there may be one or more pieces of reference splitting strategy information in the fourth type of reference splitting strategy information. For any piece of reference splitting strategy information in the fourth type of reference splitting strategy information, reference may be made to the foregoing relevant description of the target splitting strategy information that meets the case (a4) described above, and details are not described herein.

Optionally, the estimated execution period of the target computing task corresponding to any one of the U pieces of reference splitting strategy information may be understood as a total period required from start of executing the target computing task to obtaining the target computing result, if the target computing task is split according to the reference splitting strategy information.

Optionally, an objective function with independent variables of the data size, the array size, the storage capacity, and the splitting strategy information, and with a dependent variable of an execution period may be pre-constructed.

After determining the data size of the input tensor, the array sizes of the computing arrays respectively corresponding to the N computing cores 101, and the storage capacity respectively corresponding to the N computing cores 101 for the target computing task, the primary controller 20 may input, for each of the U pieces of reference splitting strategy information, the determined data size, array sizes, and storage capacity, and the reference splitting strategy information into the objective function for calculation. Thus, a corresponding value of the dependent variable may be obtained, which may be used as the estimated execution period corresponding to the reference splitting strategy information. In this way, U estimated execution periods in one-to-one correspondence to the U pieces of reference splitting strategy information may be obtained. The primary controller 20 may select an estimated execution period with shortest duration from the U estimated execution periods, and use the reference splitting strategy information corresponding to the selected estimated execution period as the target splitting strategy information. Certainly, the primary controller 20 may also select an estimated execution period with second or third shortest duration from the N estimated execution periods, and use the reference splitting strategy information corresponding to the selected estimated execution period as the target splitting strategy information.

It should be noted that the data size of the input data can reflect the actual task quantity information of the target computing task, the array sizes respectively corresponding to the at least two computing cores 101 may reflect respective computing capabilities of the at least two computing cores 101, and the storage capacity respectively corresponding to the at least two computing cores 101 may reflect respective storage capabilities of the at least two computing cores 101. In this way, the at least two estimated execution periods corresponding to at least two pieces of reference splitting strategy information is determined for the target computing task by combining the data size of the input data, the array sizes respectively corresponding to the at least two computing cores 101, and the storage capacity respectively corresponding to the at least two computing cores 101. A total period required for executing the target computing task according to the at least two pieces of reference splitting strategy information can be relatively accurately estimated on the basis of fully considering the actual task quantity information of the target computing task, the respective computing capabilities of the at least two computing cores 101, and the respective storage capabilities of the at least two computing cores 101. On this basis, the reference splitting strategy information with possible short total duration may be selected as the target splitting strategy information, which is beneficial for improving rationality of the determined target splitting strategy information, thereby improving computational efficiency for the target computing task.

In some optional examples, the primary controller 20 may determine the target computing task, determine the N computing cores 101 from the M computing cores 101 to participate in the target computing task, and determine a plurality pieces of feasible splitting strategy information (such as all theoretically feasible splitting strategy information) for the target computing task. For each piece of determined splitting strategy information, the corresponding estimated execution period is determined by using the objective function. Subsequently, the primary controller 20 may select the splitting strategy information corresponding to the estimated execution period with the shortest duration from all the determined splitting strategy information, and use the selected splitting strategy information as the target splitting strategy information. In this way, the rationality of the determined target splitting strategy information may be ensured through brute-force search, thereby ensuring the computational efficiency for the target computing task.

Certainly, the target splitting strategy information may also be determined through dynamic search instead of the brute-force search, being beneficial for shorting search time.

In some optional examples, as shown in FIG. 4, each computing core 101 in the at least two computing cores 101 may include a buffer 1013, a computing array 1011, and a slave controller (not shown).

That the at least two computing cores 101 are configured to collaborate for computation based on the respective corresponding computing configuration information, to generate a target computing result for the target computing task may include:
the slave controller is configured to control the buffer 1013 and the computing array 1011 based on the computing configuration information corresponding to the computing core 101 where the slave controller is located, so that the computing core 101 collaborates with other computing cores 101 except this computing core 101 for computation, to generate the target computing result.

Optionally, the slave controller may be electrically connected to the primary controller 20, to obtain computing configuration information from the primary controller 20. Based on the received computing configuration information, the slave controller may communicate with the foregoing memory that is configured to store the input tensor and the input weight, and/or with other computing cores 101 except the one where the slave controller is located, to obtain the to-be-computed tensor and the to-be-used weight. For specific manners for obtaining the to-be-computed tensor and the to-be-used weight, reference may be made to the foregoing relevant description, and details are not described herein. The slave controller may write the obtained to-be-computed tensor and to-be-used weight into the buffer 1013, which may be electrically connected to the computing array 1011 through an internal bus 1015. The slave controller may also control the computing array 1011 to read data from the buffer 1013 through the internal bus 1015 for computation, and to store the data generated during the computation process into the buffer 1013 through the internal bus 1015. In this way, the reference computing result corresponding to the computing core 101 where it is located may be buffered in the buffer 1013. If the N computing cores 101 all work in this way, the reference computing results respectively corresponding to the N computing cores 101 may be obtained. Using the manner described above, the target computing result may be obtained based on these reference computing results, thus completing the computation of the target computing task.

In the embodiments of this disclosure, the buffer 1013 and the computing array 1011 are controlled by using the slave controller, so that the computing core 101 where the slave controller is located can participate in the target computing task based on the computing configuration information issued by the primary controller 20. In this way, the target computing task may be efficiently and quickly completed through collaborative computing of the N computing cores 101, thereby improving the computational efficiency.

In some optional examples, the N computing cores 101 are not all computing cores 101 among the M computing cores 101. To be specific, some computing cores 101 among the M computing cores 101 do not participate in the target computing task. In this case, slave controllers in these computing cores 101 may turn off clocks and power supplies of the computing cores 101 where the slave controllers are located, so as to save power. Alternatively, these computing cores 101 may execute computing tasks other than the target computing task.

It should be noted that the implementation manner of the at least two computing cores 101 performing convolution computation (which is tensor computation) separately to complete the convolutional computing task together is described in detail above. In specific implementation, the at least two computing cores 101 may also perform vector computation separately, such as performing point-to-point element-wise computation separately, to complete the point-to-point element-wise computing task together.

If it is assumed that the point-to-point element-wise computing task is a computing task for performing point-to-point element-wise addition calculation on a feature map 1 and a feature map 2, and the at least two computing cores 101 are specifically four computing cores, which respectively are the PE1, the PE2, the PE3, and the PE4, under scheduling and control of the primary controller 20, the PE1 may perform point-to-point element-wise addition calculation on a sub-feature map 11 in the feature map 1 and a sub-feature map 21 in the feature map 2 to obtain a reference computing result 1; the PE2 may perform point-to-point element-wise addition calculation on a sub-feature map 12 in the feature map 1 and a sub-feature map 22 in the feature map 2 to obtain a reference computing result 2; the PE3 may perform point-to-point element-wise addition calculation on a sub-feature map 13 in the feature map 1 and a sub-feature map 23 in the feature map 2 to obtain a reference computing result 3; and the PE4 may perform point-to-point element-wise addition calculation on a sub-feature map 14 in the feature map 1 and a sub-feature map 24 in the feature map 2 to obtain a reference computing result 4. Herein, sizes of the sub-feature map 11, the sub-feature map 12, the sub-feature map 13, the sub-feature map 14, the sub-feature map 21, the sub-feature map 22, the sub-feature map 23, the sub-feature map 24, the reference computing result 1, the reference computing result 2, the reference computing result 3, and the reference computing result 4 may be same.

It is assumed that the sub-feature map 11 is located in an upper left area of the feature map 1, the sub-feature map 12 is located in an upper right area of the feature map 1, the sub-feature map 13 is located in a lower left area of the feature map 1, the sub-feature map 14 is located in a lower right area of the feature map 1, the sub-feature map 21 is located in an upper left area of the feature map 2, the sub-feature map 22 is located in an upper right area of the feature map 2, the sub-feature map 23 is located in a lower left area of the feature map 2, and the sub-feature map 24 is located in a lower right area of the feature map 2. The target computing result may include the reference computing result 1, the reference computing result 2, the reference computing result 3, and the reference computing result 4, where the reference computing result 1 may be located in an upper left area of the target computing result, the reference computing result 2 may be located in an upper right area of the target computing result, the reference computing result 3 may be located in a lower left area of the target computing result, and the reference computing result 4 may be located in a lower right area of the target computing result.

In some embodiments, the at least two computing cores 101 may also collaborate to complete a matrix computing task together. Matrix computation may be equivalent to convolution computation with a size of 1×1 of a convolution kernel, where the "1 " before the "×" represents a width of the convolution kernel and the "1" after the "×" represents a height of the convolution kernel.

In view of the above, according to the embodiments of this disclosure, it is supported to split the computing task according to various dimensions. Different computing cores 101 in the multi-core computing circuit 10 may collaborate for computation, and inter-core data sharing may be performed between the different computing cores 101 to enhance the collaboration, which is beneficial for improving the computational efficiency, and saving bandwidth and power consumption.

### Exemplary method

FIG. 6-1 is a schematic flowchart of a multi-core computing circuit-based computing result generation method according to some exemplary embodiments of this disclosure. The method shown in FIG. 6- 1 includes:
Step 610: determining a target computing task;
Step 620: determining at least two computing cores for participating in the target computing task from a multi-core computing circuit;
Step 630: generating computing configuration information respectively corresponding to the at least two computing cores based on the target computing task; and
Step 640: calling the at least two computing cores to collaborate for computation based on the respective corresponding computing configuration information, to generate a target computing result corresponding to the target computing task.

In some optional examples, as shown in FIG. 6- 2, step 630 includes:
Step 6301: determining a data size of input data corresponding to the target computing task, an array size of a respective computing array included in the at least two computing cores, and storage capacity of a respective buffer included in the at least two computing cores;
Step 6303: determining target splitting strategy information for the target computing task based on the data size, the array sizes respectively corresponding to the at least two computing cores, and the storage capacity respectively corresponding to the at least two computing cores; and
Step 6305: generating the computing configuration information respectively corresponding to the at least two computing cores based on the target splitting strategy information.

In some optional examples, the input data includes an input tensor and input weight.

As shown in FIG. 7, step 6305 may include:
Step 710: in response to that the target splitting strategy information is splitting strategy information split along an output channel dimension of the input weight, determining first channel identifiers and first role information respectively corresponding to the at least two computing cores, where any one of the first channel identifiers corresponds to one output channel of the input weight, and any piece of the first role information indicates whether the corresponding computing core is a first primary computing core that is configured to share the input tensor with other computing cores except this computing core; and
Step 720: generating the computing configuration information respectively corresponding to the at least two computing cores based on the first channel identifiers and the first role information respectively corresponding to the at least two computing cores.

In some optional examples, a memory is configured to store the input tensor and the input weight.

As shown in FIG. 8, step 640 may include:
step 810: calling each computing core in the at least two computing cores to obtain, based on the corresponding computing configuration information, data with the corresponding first channel identifier from the memory to serve as to-be-used weight;
step 820: calling each computing core in the at least two computing cores to, in response to determining that this computing core is the first primary computing core based on the corresponding computing configuration information, obtain the input tensor from the memory, use the obtained input tensor as a to-be-computed tensor, and share the obtained input tensor with other computing cores except the first primary computing core; or calling each computing core in the at least two computing cores to, in response to determining that this computing core is not the first primary computing core based on the corresponding computing configuration information, obtain the input tensor shared by the first primary computing core, and use the input tensor shared by the first primary computing core as a to-be-computed tensor; and
step 830: calling each computing core in the at least two computing cores to perform convolution computation on the to-be-computed tensor based on the corresponding to-be-used weight, to obtain a reference computing result, wherein the target computing result includes reference computing results respectively corresponding to the at least two computing cores.

In some optional examples, the input data includes an input tensor and input weight.

As shown in FIG. 9, step 6305 may include:
step 910: in response to that the target splitting strategy information is splitting strategy information split along a width dimension and/or a height dimension of the target computing result, determining area identifiers and second role information respectively corresponding to the at least two computing cores, wherein any one of the area identifiers corresponds to one area of the input tensor, and any piece of the second role information indicates whether the corresponding computing core is a second primary computing core that is configured to share the input weight with other computing cores except this computing core; and
step 920: generating the computing configuration information respectively corresponding to the at least two computing cores based on the area identifiers and the second role information respectively corresponding to the at least two computing cores.

In some optional examples, a memory is configured to store the input tensor and the input weight.

As shown in FIG. 10, step 640 may include:
step 1010: calling each computing core in the at least two computing cores to obtain, based on the corresponding computing configuration information, at least a part of data with the corresponding area identifier from the memory, and determine a to-be-computed tensor based on the obtained at least a part of data;
step 1020: calling each computing core in the at least two computing cores to, in response to determining that this computing core is the second primary computing core based on the corresponding computing configuration information, obtain the input weight from the memory, and share the obtained input weight with other computing cores except this computing core; or calling each computing core in the at least two computing cores to, in response to determining that this computing core is not the second primary computing core based on the corresponding computing configuration information, obtain the input weight shared by the second primary computing core, and use the input weight shared by the second primary computing core as to-be-used weight; and
step 1030: calling each computing core in the at least two computing cores to perform convolution computation on the corresponding to-be-computed tensor based on the to-be-used weight, to obtain a reference computing result, wherein the target computing result includes reference computing results respectively corresponding to the at least two computing cores.

In some optional examples, the at least two computing cores include a first computing core and a second computing core, the area identifier corresponding to the first computing core is represented as a first area identifier, and the area identifier corresponding to the second computing core is represented as a second area identifier.

Step 920 includes:
determining shared configuration information between the first computing core and the second computing core in response to that there is an overlapping part between data respectively corresponding to the first area identifier and the second area identifier in the input tensor, wherein the shared configuration information indicates that one of the first computing core and the second computing core shares partial data corresponding to the overlapping part with the other one; and
generating the computing configuration information respectively corresponding to the first computing core and the second computing core based on the first area identifier, the second area identifier, the shared configuration information, and the second role information respectively corresponding to the first computing core and the second computing core.

In some optional examples, the shared configuration information indicates that the first computing core shares the partial data corresponding to the overlapping part with the second computing core.

Step 1010 includes:
calling the first computing core to obtain all the data with the corresponding area identifier from the memory based on the corresponding computing configuration information, determine the obtained all data as the to-be-computed tensor, and share the partial data in the obtained all data with the second computing core; and
calling the second computing core to obtain data other than the partial data in the data with the corresponding area identifier from the memory based on the corresponding computing configuration information, obtain the partial data shared by the first computing core, and determine the to-be-computed tensor that includes the data obtained from the memory and the partial data shared by the first computing core.

In some optional examples, the input data includes an input tensor and input weight.

As shown in FIG. 11, step 6305 includes:
step 1110: in response to that the target splitting strategy information is splitting strategy information split along an input channel dimension of the input weight, determining third channel identifiers, second channel identifiers, and third role information respectively corresponding to the at least two computing cores, wherein any one of the third channel identifiers corresponds to one input channel of the input weight, any one of the second channel identifiers corresponds to one channel of the input tensor, and any piece of the third role information indicates whether the corresponding computing core is a third primary computing core that is configured to generate the target computing result; and
step 1120: generating the computing configuration information respectively corresponding to the at least two computing cores based on the third channel identifiers, the second channel identifiers, and the third role information respectively corresponding to the at least two computing cores.

In some optional examples, a memory is configured to store the input tensor and the input weight.

As shown in FIG. 12, step 640 includes:
step 1210: calling each computing core in the at least two computing cores to obtain, based on the corresponding computing configuration information, data with the corresponding third channel identifier from the memory to serve as to-be-used weight;
step 1220: calling each computing core in the at least two computing cores to obtain, based on the corresponding computing configuration information, data with the corresponding second channel identifier from the memory to serve as a to-be-computed tensor;
step 1230: calling each computing core in the at least two computing cores to perform convolution computation on the corresponding to-be-computed tensor based on the corresponding to-be-used weight, to obtain a reference computing result; and
step 1240: calling each computing core in the at least two computing cores to, in response to determining that this computing core is the third primary computing core based on the corresponding computing configuration information, obtain reference computing results corresponding to other computing cores except the third primary computing core, and add up all the reference computing results at a corresponding position to generate the target computing result.

In some optional examples, the input data includes an input tensor and input weight.

As shown in FIG. 13, step 6305 may include:
step 1310: in response to that the target splitting strategy information is splitting strategy information split along a batch processing dimension of the input tensor, determining batch identifiers and second role information respectively corresponding to the at least two computing cores, wherein any one of the batch identifiers corresponds to one batch of the input tensor, and any piece of the second role information indicates whether the corresponding computing core is a second primary computing core that is configured to share the input weight with other computing cores except this computing core; and
step 1320: generating the computing configuration information respectively corresponding to the at least two computing cores based on the batch identifiers and the second role information respectively corresponding to the at least two computing cores.

In some optional examples, a memory is configured to store the input tensor and the input weight.

As shown in FIG. 14, step 640 may include:
step 1410: calling each computing core in the at least two computing cores to obtain, based on the corresponding computing configuration information, data with the corresponding batch identifier from the memory to serve as a to-be-computed tensor;
step 1420: calling each computing core in the at least two computing cores to, in response to determining that this computing core is the second primary computing core based on the corresponding computing configuration information, obtain the input weight from the memory, and share the obtained input weight with other computing cores except the second primary computing core; or calling each computing core in the at least two computing cores to, in response to determining that this computing core is not the second primary computing core based on the corresponding computing configuration information, obtain the input weight shared by the second primary computing core, and use the input weight shared by the second primary computing core as to-be-used weight; and
step 1430: calling each computing core in the at least two computing cores to perform convolution computation on the corresponding to-be-computed tensor based on the to-be-used weight, to obtain a reference computing result, wherein the target computing result includes reference computing results respectively corresponding to the at least two computing cores.

In some optional examples, as shown in FIG. 15, step 6303 includes:
step 1510: determining at least two estimated execution periods corresponding to at least two pieces of reference splitting strategy information for the target computing task based on the data size, the array sizes respectively corresponding to the at least two computing cores, and the storage capacity respectively corresponding to the at least two computing cores; and
step 1520: determining the target splitting strategy information from the at least two pieces of reference splitting strategy information based on the at least two estimated execution periods.

In some optional examples, each computing core in the at least two computing cores includes a buffer, a computing array, and a slave controller.

Step 640 includes:
calling the slave controller to control the buffer and the computing array based on the computing configuration information corresponding to the computing core where the slave controller is located, so that the computing core collaborates with other computing cores except this computing core for computation, to generate the target computing result.

In the method in this disclosure, various optional embodiments, optional implementations, and optional examples in the section of exemplary circuit described above may be flexibly selected and combined according to requirements, so as to implement corresponding functions and effects. These are not enumerated in this disclosure.

For beneficial technical effects corresponding to the exemplary embodiments of this method, reference may be made to the corresponding beneficial technical effects in the section of exemplary method described above, and details are not described herein again.

### Exemplary electronic device

FIG. 16 is a block diagram of an electronic device according to an embodiment of this disclosure. An electronic device 1600 includes one or more processors 1610 and a memory 1620.

The processor 1610 may be a central processing unit (CPU) or another form of processing unit having a data processing capability and/or an instruction execution capability, and may control other components in the electronic device 1600 to implement desired functions.

The memory 1620 may include one or more computer program products, which may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 1610 may execute the one or more program instructions to implement the method according to various embodiments of this disclosure that are described above and/or other desired functions.

In an example, the electronic device 1600 may further include an input device 1630 and an output device 1640. These components are connected to each other through a bus system and/or another form of connection mechanism (not shown).

The input device 1630 may further include, for example, a keyboard and a mouse.

The output device 1640 may output various information to the outside, and may include, for example, a display, a speaker, a printer, a communication network, and a remote output device connected to the communication network.

Certainly, for simplicity, FIG. 16 shows only some of components in the electronic device 1600 that are related to this disclosure, and components such as a bus and an input/output interface are omitted. In addition, according to specific application situations, the electronic device 1600 may further include any other appropriate components.

### Exemplary computer program product and computer readable storage medium

In addition to the foregoing method and device, embodiments of this disclosure may also relate to a computer program product, which includes computer program instructions. When the instructions are run by a processor, the processor is enabled to perform the steps, of the method according to the embodiments of this disclosure, that are described in the "Exemplary method" section of this specification.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the method according to the embodiments of this disclosure, that are described in the "Exemplary method" section of this specification.

The computer readable storage medium may be one readable medium or any combination of a plurality of readable media. The readable medium may be a readable signal medium or a readable storage medium. The readable storage medium may include, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for each embodiment of this disclosure. Specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. A computing system, **characterized in that** the computing system comprises a multi-core computing circuit (10) and a primary controller (20), wherein
the primary controller (20) is configured to determine a target computing task; determine at least two computing cores (101) for participating in the target computing task from the multi-core computing circuit (10); and generate computing configuration information respectively corresponding to the at least two computing cores (101) based on the target computing task; and
the at least two computing cores (101) are configured to collaborate for computation based on the respective corresponding computing configuration information, to generate a target computing result corresponding to the target computing task.

2. The computing system according to claim 1, wherein that the primary controller (20) is configured to generate computing configuration information respectively corresponding to the at least two computing cores based on the target computing task comprises:
the primary controller (20) is configured to determine a data size of input data corresponding to the target computing task, an array size of a respective computing array comprised in the at least two computing cores (101), and storage capacity of a respective buffer comprised in the at least two computing cores (101); determine target splitting strategy information for the target computing task based on the data size, the array sizes respectively corresponding to the at least two computing cores (101), and the storage capacity respectively corresponding to the at least two computing cores (101); and generate the computing configuration information respectively corresponding to the at least two computing cores (101) based on the target splitting strategy information.

3. The computing system according to claim 2, wherein the input data comprises an input tensor and input weight; and that the primary controller (20) is configured to generate the computing configuration information respectively corresponding to the at least two computing cores (101) based on the target splitting strategy information comprises:
the primary controller (20) is configured, in response to that the target splitting strategy information is splitting strategy information split along an output channel dimension of the input weight, to determine first channel identifiers and first role information respectively corresponding to the at least two computing cores (101), wherein any one of the first channel identifiers corresponds to one output channel of the input weight, and any piece of the first role information indicates whether the corresponding computing core (101) is a first primary computing core (101) that is configured to share the input tensor with other computing cores (101) except this computing core (101); and generate the computing configuration information respectively corresponding to the at least two computing cores (101) based on the first channel identifiers and the first role information respectively corresponding to the at least two computing cores (101).

4. The computing system according to claim 3, wherein the computing system further comprises a memory, which is configured to store the input tensor and the input weight; and
that the at least two computing cores (101) are configured to collaborate for computation based on the respective corresponding computing configuration information, to generate a target computing result for the target computing task comprises:
each computing core (101) in the at least two computing cores (101) is configured to obtain, based on the corresponding computing configuration information, data with the corresponding first channel identifier from the memory to serve as to-be-used weight;
each computing core (101) in the at least two computing cores (101) is configured to, in response to determining that this computing core (101) is the first primary computing core (101) based on the corresponding computing configuration information, obtain the input tensor from the memory, use the obtained input tensor as a to-be-computed tensor, and share the obtained input tensor with the other computing cores (101) except the first primary computing core (101); or each computing core (101) in the at least two computing cores (101) is configured to, in response to determining that this computing core (101) is not the first primary computing core (101) based on the corresponding computing configuration information, obtain the input tensor shared by the first primary computing core (101), and use the input tensor shared by the first primary computing core as a to-be-computed tensor; and
each computing core (101) in the at least two computing cores (101) is configured to perform convolution computation on the to-be-computed tensor based on the corresponding to-be-used weight, to obtain a reference computing result, wherein the target computing result comprises the reference computing results respectively corresponding to the at least two computing cores (101).

5. The computing system according to claim 2, wherein the input data include an input tensor and input weight; and
that the primary controller (20) is configured to generate the computing configuration information respectively corresponding to the at least two computing cores (101) based on the target splitting strategy information comprises:
the primary controller (20) is configured to, in response to that the target splitting strategy information is splitting strategy information split along a width dimension and/or a height dimension of the target computing result, determine area identifiers and second role information respectively corresponding to the at least two computing cores (101), wherein any one of the area identifiers corresponds to one area of the input tensor, and any piece of the second role information indicates whether the corresponding computing core (101) is a second primary computing core (101) that is configured to share the input weight with other computing cores (101) except this computing core (101); and generate the computing configuration information respectively corresponding to the at least two computing cores (101) based on the area identifiers and the second role information respectively corresponding to the at least two computing cores (101).

6. The computing system according to claim 5, wherein the computing system further comprises a memory, which is configured to store the input tensor and the input weight; and
that the at least two computing cores (101) are configured to collaborate for computation based on the respective corresponding computing configuration information, to generate a target computing result for the target computing task comprises:
each computing core (101) in the at least two computing cores (101) is configured to obtain, based on the corresponding computing configuration information, at least a part of data with the corresponding area identifier from the memory, and determine a to-be-computed tensor based on the obtained at least a part of data;
each computing core (101) in the at least two computing cores (101) is configured to, in response to determining that this computing core (101) is the second primary computing core (101) based on the corresponding computing configuration information, obtain the input weight from the memory, and share the obtained input weight with the other computing cores (101) except this computing core (101); or each computing core (101) in the at least two computing cores (101) is configured to, in response to determining that this computing core (101) is not the second primary computing core (101) based on the corresponding computing configuration information, obtain the input weight shared by the second primary computing core (101), and use the input weight shared by the second primary computing core (101) as to-be-used weight; and
each computing core (101) in the at least two computing cores (101) is configured to perform convolution computation on the corresponding to-be-computed tensor based on the to-be-used weight, to obtain a reference computing result, wherein the target computing result comprises the reference computing results respectively corresponding to the at least two computing cores (101).

7. The computing system according to claim 6, wherein the at least two computing cores (101) comprise a first computing core (101) and a second computing core (101), the area identifier corresponding to the first computing core (101) is represented as a first area identifier, and the area identifier corresponding to the second computing core (101) is represented as a second area identifier; and
that the primary controller (20) is configured to generate the computing configuration information respectively corresponding to the at least two computing cores (101) based on the area identifiers and the second role information respectively corresponding to the at least two computing cores (101) comprises:
the primary controller (20) is configured to determine shared configuration information between the first computing core (101) and the second computing core (101) in response to that there is an overlapping part between data respectively corresponding to the first area identifier and the second area identifier in the input tensor, wherein the shared configuration information indicates that one of the first computing core (101) and the second computing core (101) shares partial data corresponding to the overlapping part with the other one; and generate the computing configuration information respectively corresponding to the first computing core (101) and the second computing core (101) based on the first area identifier, the second area identifier, the shared configuration information, and the second role information respectively corresponding to the first computing core (101) and the second computing core (101).

8. The computing system according to claim 7, wherein the shared configuration information indicates that the first computing core (101) shares the partial data corresponding to the overlapping part with the second computing core (101); and
that each computing core (101) in the at least two computing cores (101) is configured to obtain, based on the corresponding computing configuration information, at least a part of data with the corresponding area identifier from the memory, and determine a to-be-computed tensor based on the obtained at least a part of data comprises:
the first computing core (101) is configured to obtain all the data with the corresponding area identifier from the memory based on the corresponding computing configuration information, determine the obtained all data as the to-be-computed tensor, and share the partial data in the obtained all data with the second computing core (101); and
the second computing core (101) is configured to obtain data other than the partial data in the data with the corresponding area identifier from the memory based on the corresponding computing configuration information, obtain the partial data shared by the first computing core (101), and determine the to-be-computed tensor that comprises the data obtained from the memory and the partial data shared by the first computing core (101).

9. The computing system according to claim 2, wherein the input data include an input tensor and input weight; and
that the primary controller (20) is configured to generate the computing configuration information respectively corresponding to the at least two computing cores (101) based on the target splitting strategy information comprises:
the primary controller (20) is configured to, in response to that the target splitting strategy information is splitting strategy information split along an input channel dimension of the input weight, determine third channel identifiers, second channel identifiers, and third role information respectively corresponding to the at least two computing cores (101), wherein any one of the third channel identifiers corresponds to one input channel of the input weight, any one of the second channel identifiers corresponds to one channel of the input tensor, and any piece of the third role information indicates whether the corresponding computing core (101) is a third primary computing core (101) that is configured to generate the target computing result; and generate the computing configuration information respectively corresponding to the at least two computing cores (101) based on the third channel identifiers, the second channel identifiers, and the third role information respectively corresponding to the at least two computing cores (101).

10. The computing system according to claim 9, wherein the computing system further comprises a memory, which is configured to store the input tensor and the input weight; and
that the at least two computing cores (101) are configured to collaborate for computation based on the respective corresponding computing configuration information, to generate a target computing result for the target computing task comprises:
each computing core (101) in the at least two computing cores (101) is configured to obtain, based on the corresponding computing configuration information, data with the corresponding third channel identifier from the memory to serve as to-be-used weight;
each computing core (101) in the at least two computing cores (101) is configured to obtain, based on the corresponding computing configuration information, data with the corresponding second channel identifier from the memory to serve as a to-be-computed tensor;
each computing core (101) in the at least two computing cores (101) is configured to perform convolution computation on the corresponding to-be-computed tensor based on the corresponding to-be-used weight, to obtain a reference computing result; and
each computing core (101) in the at least two computing cores (101) is configured to, in response to determining that this computing core (101) is the third primary computing core (101) based on the corresponding computing configuration information, obtain the reference computing results corresponding to other computing cores (101) except the third primary computing core (101), and add up all the reference computing results at a corresponding position to generate the target computing result.

11. The computing system according to claim 2, wherein the input data include an input tensor and input weight; and that the primary controller (20) is configured to generate the computing configuration information respectively corresponding to the at least two computing cores (101) based on the target splitting strategy information comprises:
the primary controller (20) is configured to, in response to that the target splitting strategy information is splitting strategy information split along a batch processing dimension of the input tensor, determine batch identifiers and second role information respectively corresponding to the at least two computing cores (101), wherein any one of the batch identifiers corresponds to one batch of the input tensor, and any piece of the second role information indicates whether the corresponding computing core (101) is a second primary computing core (101) that is configured to share the input weight with the other computing cores (101) except this computing core (101); and generate the computing configuration information respectively corresponding to the at least two computing cores (101) based on the batch identifiers and the second role information respectively corresponding to the at least two computing cores (101).

12. The computing system according to claim 11, wherein the computing system further comprises a memory, which is configured to store the input tensor and the input weight; and
that the at least two computing cores (101) are configured to collaborate for computation based on the respective corresponding computing configuration information, to generate a target computing result for the target computing task comprises:
each computing core (101) in the at least two computing cores (101) is configured to obtain, based on the corresponding computing configuration information, data with the corresponding batch identifier from the memory to serve as a to-be-computed tensor;
each computing core (101) in the at least two computing cores (101) is configured to, in response to determining that this computing core (101) is the second primary computing core (101) based on the corresponding computing configuration information, obtain the input weight from the memory, and share the obtained input weight with other computing cores (101) except the second primary computing core (101); or each computing core (101) in the at least two computing cores (101) is configured to, in response to determining that this computing core (101) is not the second primary computing core (101) based on the corresponding computing configuration information, obtain the input weight shared by the second primary computing core (101), and use the input weight shared by the second primary computing core (101) as to-be-used weight; and
each computing core (101) in the at least two computing cores (101) is configured to perform convolution computation on the corresponding to-be-computed tensor based on the to-be-used weight, to obtain a reference computing result, wherein the target computing result comprises the reference computing results respectively corresponding to the at least two computing cores (101).

13. The computing system according to claim 2, wherein that the primary controller (20) is configured to determine target splitting strategy information for the target computing task based on the data size, the array sizes respectively corresponding to the at least two computing cores (101), and the storage capacity respectively corresponding to the at least two computing cores (101) comprises:
the primary controller (20) is configured to determine at least two estimated execution periods corresponding to at least two pieces of reference splitting strategy information for the target computing task based on the data size, the array sizes respectively corresponding to the at least two computing cores (101), and the storage capacity respectively corresponding to the at least two computing cores (101); and determine the target splitting strategy information from the at least two pieces of reference splitting strategy information based on the at least two estimated execution periods.

14. The computing system according to any one of the preceding claims, wherein each computing core (101) in the at least two computing cores (101) comprises a buffer (1013), a computing array (1011), and a slave controller; and
that the at least two computing cores (101) are configured to collaborate for computation based on the respective corresponding computing configuration information, to generate a target computing result for the target computing task comprises:
the slave controller is configured to control the buffer (1013) and the computing array (1011) based on the computing configuration information corresponding to the computing core (101) where the slave controller is located, so that the computing core (101) collaborates with the other computing cores (101) except this computing core (101) for computation, to generate the target computing result.

15. A multi-core computing circuit-based computing result generation method, **characterized in that** the method comprises:
determining (610) a target computing task;
determining (620) at least two computing cores for participating in the target computing task from a multi-core computing circuit;
generating (630) computing configuration information respectively corresponding to the at least two computing cores based on the target computing task; and
calling (640) the at least two computing cores to collaborate for computation based on the respective corresponding computing configuration information, to generate a target computing result corresponding to the target computing task.

16. A computer readable storage medium, wherein the storage medium stores a computer program that, when executed by a processor, causes the processor to implement the multi-core computing circuit-based computing result generation method according to claim 15.

17. An electronic device, **characterized in that** the electronic device comprises:
a processor (1610); and
a memory (1620), configured to store processor-executable instructions, wherein
the processor (1610) is configured to read the executable instructions from the memory (1620), and execute the instructions to implement the multi-core computing circuit-based computing result generation method according to claim 15.
